(19) Europäisches Patentamt
European Patent Office
Office européen des brevets

(11) **EP 1 231 564 B1**

(12) **EUROPÄISCHE PATENTSCHRIFT**

(45) Veröffentlichungstag und Bekanntmachung des Hinweises auf die Patenterteilung:
**28.03.2007 Patentblatt 2007/13**

(51) Int Cl.:
*G06T 5/00* *(2006.01)*     *H04N 1/407* *(2006.01)*
*G06T 5/40* *(2006.01)*

(21) Anmeldenummer: **01102802.4**

(22) Anmeldetag: **09.02.2001**

(54) **Digitale lokale Bildeigenschaftssteuerung mittels Masken**

Digital local control of image properties by means of masks

Contrôle local numérique de propriétés d'image au moyen de masques

(84) Benannte Vertragsstaaten:
**CH DE FR GB IT LI**

(43) Veröffentlichungstag der Anmeldung:
**14.08.2002 Patentblatt 2002/33**

(73) Patentinhaber: **Imaging Solutions AG**
**8105 Regensdorf (CH)**

(72) Erfinder: **Kraft Walter**
**8049 Zürich (CH)**

(74) Vertreter: **Schwabe - Sandmair - Marx**
**Patentanwälte**
**P.O. Box 86 02 45**
**81629 München (DE)**

(56) Entgegenhaltungen:
**EP-A- 0 933 924        EP-A- 0 959 616**
**EP-A- 1 024 400        GB-A- 2 336 266**
**US-A- 4 695 884**

## Beschreibung

Die vorliegende Erfindung betrifft ein Verfahren zur lokalen digitalen Bildeigenschaftssteuerung mittels Korrekturmasken, um eine ortsabhängige Korrektur an fotografischen Bilddaten vorzunehmen, die zu einer ortsabhängigen Änderung zumindest einer Bildeigenschaft in dem Bild führt, das durch die fotografischen Bilddaten dargestellt wird. Weiter betrifft die Erfindung ein Verfahren zur Spreizung eines Wertebereichs, der Bildeigenschaften beschreibt, das in Kombination mit dem vorgenannten Korrekturverfahren eingesetzt wird. Schließlich betrifft die Erfindung eine dem Verfahren entsprechende Vorrichtung, ein dem Verfahren entsprechendes Programm, ein Computerspeichermedium mit dem Programm und fotografische Printer, fotografische Drucker, fotografische Labors, insbesondere Minilabs oder Mikrolabs, die das erfindungsgemäße Verfahren, die Vorrichtung oder das Programm verwenden.

Der Begriff der "Fotografie" wie er hierin verwendet wird, bezeichnet insbesondere die (dauerhafte) Erfassung durch elektromagnetische Strahlung (insbesondere Licht) erzeugter Bilder durch hierfür geeignete Mittel (z.B. Fotoapparat mit Film, Digitalkamera mit CCD-Chip, Filmkamera, Videokamera usw.).

Das Gebiet der vorliegenden Erfindung betrifft die Verarbeitung von fotografischer Bildinformation, die das fotografische Bild darstellt, mit Hilfe der Datenverarbeitung, insbesondere Hardware und Software. Die fotografische Bildinformation wird durch die fotografischen, digitalen Bilddaten dargestellt. Die fotografischen Bilddaten können direkt von einer Digitalkamera stammen oder z.B. von einem Scanner, der einen Film abtastet. Sie können auch elektronisch abgespeichert sein (z.B. CD-ROM, DVD), über ein Netzwerk (z.B. LAN oder Internet) abrufbar sein.

Die fotografischen Bilddaten werden durch einen Printer oder durch ein fotografisches Labor umgesetzt, so dass ein Bild auf einem physischen Medium oder einem Monitor dargestellt wird. Als physisches Medium dient z.B. Fotopapier oder Normalpapier (mit Toner oder Tinte). Die Qualität des dabei erzielten fotografischen Bildes ist jedoch nicht immer zufrieden stellend.

Eine wesentliche Ursache hierfür liegt darin, dass der Gamutbereich der ursprünglichen Bildinformation auf dem Abbildungsmedium nicht umgesetzt werden kann.

Häufig sind z.B. Helligkeitsunterschiede, die für den Fotografen beim Blick durch den Sucher während der Erfassung der fotografischen Bildinformation noch erkennbar waren, für den Betrachter der fotografischen Abbildung, die auf der erfassten fotografischen Bildinformation basiert, nicht mehr erkennbar, wenn sich diese Helligkeitsunterschiede in einem dunklen oder sehr hellen Bereich der fotografischen Abbildung befinden. In der EP 1 024 400 ist ein Vorschlag zur Lösung dieses Problems mittels Masken offenbart.

Die vorliegende Anmeldung betrifft neben der Helligkeit auch andere Bildeigenschaften, wie beispielsweise den Farbton, die Farbsättigung, die Ausprägung einzelner Farben (Farbintensitäten), lokale Bildeigenschaften, die auf dem optischen Zusammenwirken benachbarter Bildelemente beruhen, wie z.B. der Kontrast (Kontrast der Helligkeit, Kontrast bestimmter Farben) usw.

Der globale Kontrast, im folgenden auch einfach nur "Kontrast" genannt, entspricht insbesondere der Differenz (und/oder dem Verhältnis) zwischen maximaler und minimaler Helligkeit im (gesamten) Bild. Bevorzugt wird der globale Kontrast basierend auf einem Bild ermittelt, das einem Bilddetailentfernungsverfahren unterzogen wurde. Bevorzugt wird der globale Kontrast basierend auf einem Bild mit einer reduzierten Auflösung ermittelt. Der Vorteil liegt hierbei daran, dass die Empfindlichkeit auf Rauschen und auf unwesentliche Bilddetails geringer wird.

Der Detailkontrast, der im folgenden auch lokaler Kontrast genannt wird, bezeichnet insbesondere die Differenz (oder das Verhältnis) zwischen maximaler und minimaler Helligkeit in einer gewissen Umgebung eines Bildpunktes. Bevorzugt wird der Detailkontrast wieder basierend auf einem Bild ermittelt, das einem Detailentfernungsverfahren unterzogen wurde und insbesondere bei einem Bild ermittelt, das eine reduzierte Auflösung hat.

Grundsätzlich wird die Bildschärfe durch das Auflösungsvermögen der Kameraoptik begrenzt. Dies wird durch den "modulation transfer factor" (als Funktion der Ortsfrequenz) beispielsweise charakterisiert. Eine ungenaue Fokussierung bewirkt eine zusätzliche Verunschärfung. Bei einer mangelnden Tiefenschärfe können nicht alle Objekte einer Szene gleich scharf abgebildet werden. Die Schärfe wird bevorzugt aufgrund des hoch aufgelösten Bildes beurteilt. Dementsprechend wird die im folgenden erwähnte Schärfungs-Korrekturmaske bevorzugt auf das hoch aufgelöste Bild (Feinbild) angewendet. Als Maß für die Unschärfe kann z.B. die Anzahl der Pixel, über welche eine scharfe Kante "verschmiert" wird, verwendet werden. Der Schärfeeindruck kann beispielsweise durch Filterung (mit einem Filter, welches die höheren Ortsfrequenzen anhebt) verbessert werden.

Aufgabe der Erfindung ist es, lokale Änderungen der Bildeigenschaften im Bild zu ermöglichen.

Vorstehende Aufgabe wird durch die Gegenstände der Ansprüche 1 und 6 gelöst. Vorteilhafte Weiterbildungen gehen aus den abhängigen Ansprüchen hervor.

Die Erfindung setzt zum Korrigieren der fotografischen Bilddaten eine oder mehrere Masken ein, die hierin als Korrekturmasken bezeichnet werden. Die Elemente der Maske sind Orten im Bild zugeordnet. Diese Orte können Bildelemente (Pixel) oder Bildbereiche oder Bildteile mit mehreren Elementen sein. Vorzugsweise ist die Beziehung zwischen den Elementen der Maske und den Orten ein-eindeutig (bijektiv), das heißt jedem Maskenelement ist genau ein Ort (beispielsweise ein Bildelement) zugeordnet und umgekehrt. Vorzugsweise überlappen sich die einzelnen Orte nicht.

Mit Hilfe einer Maske kann somit eine ortsabhängige Korrektur an den fotografischen Bilddaten festgelegt werden, wobei die einzelnen Maskenelemente für die verschiedenen Orte festlegen, wie an den jeweiligen Orten zu korrigieren ist.

Bekannt ist die Anwendung von Masken insbesondere aus der analogen Verarbeitung von Filmen, wo mit Hilfe unscharfer Masken das Helligkeitsprofil der Abbildung bei einem Aufbelichtungsvorgang geändert wird. Die Maske wird dabei in dem Belichtungsstrahlengang positioniert und modifiziert die Belichtungsintensität. Eine sog. hybride Maskierung, die eine digitale Berechnung der Maske mit einer Beeinflussung des Belichtungsstrahlengangs verbindet, ist aus der oben erwähnten EP 1 024 400 bekannt. Rein digitale Maskierungen sind aus EP 0 971 315, EP 0 971 314, EP 0 959 616, EP 0 772 342 und EP 0 933 924 bekannt.

Die vorliegende Erfindung betrifft nicht nur Masken, deren Elemente die Helligkeit an bestimmten Bilddorten beeinflussen sollen, wobei die Elemente basierend auf den Helligkeitswerten an den jeweiligen Orten berechnet werden, sondern die vorliegende Erfindung betrifft allgemein Masken, die eine Bildeigenschaft beeinflussen, bei der es sich nicht um die Helligkeit handeln muss. Eine Bildeigenschaft ist eine von einem menschlichen Betrachter wahrgenommene Erscheinungseigenschaft des Bildes und insbesondere der Bildbereiche, wie z.B. Helligkeit, Farbton, Farbsättigung, Intensität einer Farbe (z.B. der Wert von r bei einem RGB-Vektor oder der Wert von c bei einem CMY-Vektor), Schärfe, Kontrast, mittlere Helligkeit, mittlere Farbe, relative Anzahl von Punkten mit einer charakteristischen Farbe (z.B. "Memory Color"), globaler Kontrast (Differenz zwischen maximaler und minimaler Helligkeit), feiner und mittlerer Detailkontrast, Histogramm der Helligkeitswerte (Merkmalvektor), Farbhistogramm (Mermalmatrix), mittlere Farbsättigung, Helligkeitsgradient links/rechts, oben/unten, usw. Bildeigenschaften sind beispielsweise in R.W.G. Hunt, "Color reproduction by photography", Rep. Prog. Phys. 1977, 40, pp. 1071-1121) beschrieben.

Erfindungsgemäß wird die Korrekturmaske aus den zu korrigierenden fotografischen Bilddaten (z. B. Originalbilddaten) bestimmt. Zur Bestimmung der Elemente kann auch noch Zusatzinformation verwendet werden, wie z.B. Information über den Kameratyp, die zusätzlich zu den fotografischen Bilddaten vorhanden ist und diesen zugeordnet ist.

Die Elemente der Korrekturmaske werden als "Korrekturelemente" bezeichnet. Die Korrekturelemente sind Orten im Bild zugeordnet, die Teile des Bildes betreffen. Ein derartiger Bildteil kann einem Bildelement (Pixel) entsprechen, wobei ein Bilddatum genau einem Pixel zugeordnet ist. Der Bildteil kann aber auch mehrere Bildelemente umfassen. Die Korrekturelemente legen die Korrektur für diejenigen Bilddaten fest, die die Bildteile betreffen und für diese die Bildeigenschaft festlegen. Die Änderungen, die die Korrekturelemente festlegen, werden als Korrekturänderungen bezeichnet. Die Korrekturelemente legen also die Änderung von mindestens einer Bildeigenschaft in den Bildteilen fest, die ihnen zugeordnet sind. Beispielsweise beschreibt ein Korrekturelement einen Aufhellungsfaktor, der festlegt, wie der Bildteil, der dem Korrekturelement zugeordnet ist, aufzuhellen ist.

Um die Korrektur zu erzielen, wird die Korrekturmaske auf die Bilddaten angewendet. Die Anwendung beschreibt allgemein eine mathematische Verknüpfung zwischen den Bilddaten oder dem Bilddatum, die bzw. das einem bestimmten Bildteil zugeordnet sind oder ist, und dem Bildteil zugeordneten Korrekturelement. Hierzu wird aus dem Bilddatum oder den Bilddaten eine Bildeigenschaft extrahiert, beispielsweise die durch die Bilddaten beschriebene Helligkeit, und die Bildeigenschaft wird mathematisch mit dem Korrekturelement verknüpft. Beispielsweise wird der Wert des Korrekturelements zu dem Wert der Helligkeit der Bilddaten addiert, um so eine Aufhellung zu erzielen. Für diese Verknüpfung wird vorzugsweise ein geeigneter Farbraum gewählt, wobei vor und/oder nach der Verknüpfung eine Transformation in einem anderen Farbraum stattfinden kann.

Ein besonderer Aspekt der Erfindung ist, dass durch die Verwendung einer oder mehrerer Korrekturmasken und eine entsprechende Wahl der mathematischen Verknüpfung von Korrekturelementen und Bilddaten nicht nur eine Bildeigenschaft, sondern mehrerer Bildeigenschaften korrigiert werden.

Ein wesentlicher Aspekt der Erfindung ist es, dass die Korrekturmasken so gestaltet werden, dass im Bild enthaltene Detailinformation nicht verloren geht. Zu diesem Zweck werden die Elemente der Korrekturmaske vorzugsweise so gestaltet, dass sie benachbarte Bildelemente möglichst gleich oder nur wenig unterschiedlich korrigieren. Um dies zu erzielen, können verschiedene Methoden angewendet werden. Beispielsweise können die das Bild darstellenden Bilddaten vor und/oder nach der Korrektur einem Verfahren unterzogen werden, das eine Weichzeichnung bewirkt, wie z.B. ein Datenreduktionsverfahren (z. B. Downsampling-Verfahren) eine Tiefpassfilterung, ein Mittelungsverfahren oder einem Gauß-Filter. Auch können durch diese Verfahren, die der Entfernung von Bilddetails dienen, Bilder erzeugt werden, die das ursprüngliche Bild ohne Details, also "grob" wiedergeben. Derartige Bilder werden im folgenden "Grobbilder" genannt. Basierend auf diesen Grobbildern können unscharfe Masken erzeugt werden. Vorzugsweise werden die unscharfen Masken auf Grund eines niedrig aufgelösten Bildes (Grobbildes) berechnet, das beispielsweise durch Downsampling erzielt wurde, wodurch insbesondere Rechenkapazität eingespart werden kann. Bilder die die Bilddetails enthalten, die also keinem Detailentfernungsverfahren unterzogen wurden, werden im folgenden auch als "Feinbild" bezeichnet. Die das Feinbild darstellenden Bilddaten werden als "Feinbilddaten" bezeichnet. Die Korrekturmasken können direkt aus den Feinbilddaten bestimmt werden. Aus den oben genannten Gründen werden sie jedoch bevorzugt basierend auf Grobbilddaten bestimmt, die von den Feinbilddaten (Originalbilddaten) abgeleitet werden. Entsprechend ist das Grobbild von dem Feinbild (Originalbild) abgeleitet.

Das Grobbild wird durch Grobbilddaten dargestellt, die aus dem Detailentfernungsverfahren hervorgehen. Wie das Originalbild (Feinbild) hat auch das Grobbild eine Vielzahl von Bildelementen, die im Folgenden als "Grobbildelemente" bezeichnet werden, wobei "Grobbildteile" gleich einem Grobbildelement sein können oder mehrere Grobbildelemente aufweisen können. Eine Korrekturmaske, die basierend auf den Grobbilddaten gewonnen wird, wird als eine Grobkorrekturmaske bezeichnet, deren Elemente sich auf die Grobbildteile beziehen. Die Elemente der Grobbildmaske beschreiben Änderungen, die als "Grobänderungen" bezeichnet werden und die die Änderung der Bildeigenschaften oder mindestens einer Bildeigenschaft der Grobbildteile festlegen. Die Grobänderungen werden im Hinblick auf die Korrekturänderungen gestaltet, die von der Korrekturmaske vorzunehmen sind. Soll die Korrekturmaske also beispielsweise das Helligkeitsprofil ändern, so werden die Elemente der Grobkorrekturmaske so gestaltet, dass sie das Helligkeitsprofil des Grobbildes ändern. Falls das Grobbild aus einem Datenreduktionsverfahren gewonnen wurde, kann die Korrekturmaske dann durch ein Ausweitungsverfahren ("Upsampling") gewonnen werden. Da die Grobänderungen Änderungen beschreiben, die auch von der Korrekturmaske vorgenommen werden sollen, basieren somit die Korrekturänderungen auf den Grobänderungen. Falls die Anzahl der Grobbildelementen der Anzahl der Feinbildelemente entsprechen sollte, das Grobbild also weniger Details enthält aber kein Datenreduktionsverfahren angewendet wurde, kann die Korrekturmaske der Grobkorrekturmaske gleichgesetzt werden.

Die Erfindung betrifft also insbesondere ein Verfahren, bei welchem zur Bestimmung der Korrekturmaske folgende Schritte durchgeführt werden:

a) ein Datenreduktionsverfahren wird auf die zu korrigierenden Bilddaten (Grobbilddaten) angewendet, so dass die daraus hervorgehenden reduzierten Bilddaten ein Grobbild mit geringerer Auflösung als das Originalbild darstellen, wobei das Grobbild eine Vielzahl von Grobbildelementen und Grobbildteilen aufweist, wobei ein Grobbildteil eine Anzahl von Grobbildelementen umfasst;

b) eine Grobkorrekturmaske wird bestimmt, die für die den Grobbildelementen entsprechenden reduzierten Bilddaten Grobänderungen für die Grobbildteile festlegen, wobei die Grobänderungen zumindest einem Teil der Änderungen entsprechen, die die Korrekturänderungen in den Bildteilen vornehmen sollen;

c) die Korrekturmaske wird basierend auf der Grobkorrekturmaske durch Anwendung eines Ausweitungsverfahrens auf die Grobelemente bestimmt, so dass die Korrekturänderungen auf den Grobänderungen basieren.

Entsprechen die Grobänderungen nur einem Teil der durch die Korrekturmaske durchgeführten Änderungen, ändern sie also beispielsweise nur eine Bildeigenschaft, während die Korrekturmaske zwei Bildeigenschaften korrigiert, so kann die Korrekturmaske basierend auf mehreren Grobkorrekturmasken bestimmt werden, bei denen beispielsweise eine Grobkorrekturmaske die Änderung der Helligkeit beschreibt und die andere Korrekturmaske die Änderung der Farbsättigung. Die daraus bestimmte Korrekturmaske beschreibt also dann sowohl eine Änderung der Helligkeit als auch eine Änderung der Farbsättigung. Alternativ wird eine erste Korrekturmaske auf einer ersten Grobkorrekturmaske bestimmt und eine zweite Korrekturmaske basierend auf einer zweiten Grobkorrekturmaske. Vorteilhaft an diesem Verfahren ist, dass die zweite Grobkorrekturmaske basierend auf reduzierten Bilddaten (Grobbilddaten) gewonnen werden kann, die bereits durch die erste, vorhergehenden Grobkorrekturmaske korrigiert worden sind. Damit kann beispielsweise eine zweite Grobkorrekturmaske bestimmt werden, die die Farbsättigung in Abhängigkeit davon ändert, wie die erste Grobkorrekturmaske die Helligkeit des Grobbildes geändert hat. Dadurch wird eine gegenseitige Abhängigkeit der Korrekturen unterschiedlicher Bildeigenschaften bewirkt. Auf Grund der Eigenschaft der Masken kann dies natürlich ortsabhängig erfolgen.

Auch können mehrere Korrekturmasken aus den Grobkorrekturmasken bestimmt werden. Diese Korrekturmasken werden dann nacheinander auf die zu korrigierenden Bilddaten (Feinbilddaten) angewendet, so dass die von einer vorhergehenden Korrekturmaske korrigierten Bilddaten (korrigierte Feinbilddaten) von der nachfolgenden Korrekturmaske erneut korrigiert werden. Dabei können die einzelnen Korrekturmasken auf einer oder mehreren Grobkorrekturmasken basieren.

Vorzugsweise wird erfindungsgemäß also mindestens eine weitere Grobkorrekturmaske, wie oben beschrieben wurde, bestimmt. Vorzugsweise wird jede weitere Grobkorrekturmaske auf die durch die vorhergehende Grobkorrekturmaske geänderten Grobbilddaten angewendet.

Vorzugsweise wird bei dem erfindungsgemäßen Verfahren auch mindestens eine weitere Korrekturmaske bestimmt. Dabei erfolgt die Bestimmung der Korrekturmaske vorzugsweise so, dass für die Bestimmung einer jeden Korrekturmaske mindestens eine der Grobkorrekturmasken als Basis dient.

Alternativ oder zusätzlich können auch unterschiedliche Grobkorrekturmasken miteinander kombiniert werden, bevor basierend auf ihnen eine oder mehrere Korrekturmasken bestimmt werden, wobei vorzugsweise verschiedene Korrekturmasken auf unterschiedlichen Grobkorrekturmasken basieren.

Auch können Hilfsmasken, die aus der Analyse eines Grob- oder Feinbildes gewonnen wurden (z. B. die unten erläuterten "Hautmasken"), dazu verwendet werden, bereits bestimmte Grobkorrekturmasken oder Korrekturmasken zu korrigieren. Wie jedes einzelne Element zu korrigieren ist, wird durch ein jeweils zugeordnetes Element der Hilfsmaske bestimmt.

Die Anwendung von Datenreduktionsverfahren, insbesondere von "Downsampling", kann nicht nur in einer Stufe, sondern in zwei oder mehr Stufen erfolgen. Je nach vorzunehmender Korrektur kann eine unterschiedliche Bildauflösung als ausreichend und damit Rechenkapazität sparend angesehen werden. Für die Korrektur von Bildeigenschaften, die durch einzelne Bildelemente und dem diesem Bildelement zugeordneten Bilddatum (insbesondere Farbwert) dargestellt werden können, genügt üblicherweise eine geringe Auflösung. Dies betrifft z.B. eine Korrektur der Helligkeit, der Farbsättigung und des Farbtons.

Werden Bildeigenschaften gewonnen, die durch mehr als ein Bildelement beschrieben werden, wie z.B. der Helligkeitskontrast oder der Farbkontrast, so wird eine mittlere Auflösung des Bildes zur Bestimmung einer Korrekturmaske bevorzugt.

Die Erfindung betrifft somit insbesondere auch ein Verfahren, bei welchem in mindestens zwei Stufen Datenreduktionsverfahren auf die zu korrigierenden Bilddaten angewendet werden. Dabei dienen bevorzugt die aus einer Stufe hervorgehenden Bilddaten als Eingangsdaten für die nächste Stufe der Datenreduktion. Bevorzugt nutzt dann das erfindungsgemäße Verfahren zur Bestimmung der Korrekturmasken Grobkorrekturmasken unterschiedlicher Stufe, die aus Bilddaten unterschiedlicher Datenreduktionsstufen hervorgehen. Beispielsweise gibt es dann eine Grobkorrekturmaske für die Bildschärfe (erste Stufe) und eine Grobkorrekturmaske für die Helligkeit (zweite Stufe).

Die zu korrigierenden, fotografischen Bilddaten sind vorzugsweise so gestaltet, dass sie Farbwerte in einem Farbraum beschreiben. Der Farbraum kann vom unterschiedlichsten Typ sein, wie Lab-Farbräume bzw. CIELab-Farbräume, RGB-Farbräume, sRGB-Farbräume, HSV- und HLS-Farbräume, CMYK-Farbräume, XYZ-Farbräume, Luv-Farbräume usw. handeln.

Im allgemeinen hat die Korrektur einer bestimmten Bildeigenschaft Einfluss auf die Wahrnehmung einer anderen Bildeigenschaft hat. So wird die Farbsättigung in aufgehellten unterbelichteten Bereichen oder in abgedunkelten überbelichteten Bereichen häufig als zu gering empfunden. Es besteht also bei der Wahrnehmung der Bildeigenschaften eine Wechselwirkung. Der Erfinder der vorliegenden Anmeldung hat herausgefunden, dass diese Wechselwirkung bei der Korrektur eines Bildes - wie unten beschrieben - berücksichtigt werden kann, indem beispielsweise durch eine Korrektur mehrere Bildeigenschaften gleichzeitig korrigiert werden oder indem eine Korrektur basierend auf der anderen Korrektur durchgeführt wird.

Handelt es sich um einen Farbraum, dessen Dimensionen Farben beschreiben, wie z.B. der RGB- oder CMY-Farbraum, so sind die Farbwerte durch Vektoren in diesem Farbraum darstellbar. Insbesondere in diesem Fall umfassen die Korrekturänderungen, die zumindest von einer Korrekturmaske durchgeführt werden, gemäß einer Ausführungsform vorzugsweise Änderungen, die sich durch eine mathematische Operation darstellen lassen, die die Multiplikation der Vektoren mit einem Faktor umfasst. Die Elemente der Korrekturmaske entsprechen also Faktoren oder stellen eine mathematische Operation dar, die Faktoren enthält. Diese Faktoren oder die mathematischen Operationen werden dann auf die insbesondere durch Vektoren darstellbaren Bilddaten angewendet. Die Erfinder der vorliegenden Anmeldung haben festgestellt, dass eine derartige mathematische Operation beispielsweise zu einer Änderung der Bilddaten führt, die eine Änderung sowohl der Helligkeit als auch der Farbsättigung umfasst.

Gemäß einer Ausführungsform wird eine Korrekturmaske so gestaltet, dass ihre Elemente Vektoren und/oder Skalare enthalten, die mit den Vektoren, die die Bilddaten darstellen, unter Anwendung einer mathematischen Operation, die insbesondere eine Multiplikation umfasst, verknüpft werden. Die mathematische Operation umfasst vorzugsweise zusätzlich oder alternativ die Addition.

Wie bereits oben bemerkt wurde, ist im Stand der Technik bekannt, eine Maske, die die Helligkeit ändert, basierend auf Information über die Helligkeit zu bestimmen. Erfindungsgemäß wird vorzugsweise nicht nur eine Bildeigenschaft geändert, sondern wenigstens zwei. Dabei basieren die Änderungen, die die Korrekturmaske an einer Bildeigenschaft hervorruft, vorzugsweise zumindest auch auf Information über eine andere Bildeigenschaft und nicht oder nicht nur auf Information über die gleiche Bildeigenschaft. Beispielsweise kann eine Korrekturmaske bestimmt werden, die die Farbsättigung in Abhängigkeit von Information über die Bildhelligkeit bestimmt und/oder in Abhängigkeit davon, wie die Bildhelligkeit geändert werden soll. Die eine Bildeigenschaft betreffende Korrekturänderung wird also beispielsweise basierend darauf bestimmt, wie stark die andere Bildeigenschaft geändert wird. Auf Grund der erfindungsgemäßen Verwendung von Masken kann dies natürlich lokal aufgelöst und damit ortsabhängig erfolgen.

Durch eine erste Korrekturmaske wird eine erste Korrekturänderung einer ersten Bildeigenschaft an dem hoch aufgelösten Bild bewirkt. Das korrigierte, hochaufgelöste Bild kann dann analysiert werden. Basierend auf dieser Analyse, die beispielsweise die lokale Verteilung einer bestimmten Bildeigenschaft bestimmt, kann eine zweite Korrekturmaske bestimmt werden. Diese führt dann eine zweite Korrekturänderung durch, bei der dann vorzugsweise eine andere Bildeigenschaft als bei der ersten Korrekturänderung lokal geändert wird. Diese erste und zweite Korrekturänderung kann mathematisch auch in nur einem Schritt (durch nur eine Korrekturmaske) oder bevorzugt in mehreren Schritten (durch mehrere Korrekturmasken) oder durch (gewichtete) Kombination von mehreren Korrekturmasken oder Grobkorrekturmasken erfolgen. Vorzugsweise erfolgt die Analyse aber anhand eines insbesondere niedrig aufgelösten Bildes ohne Details mit Hilfe der oben erwähnten Grobbildern und Grobkorrekturmasken. Beispielsweise wird durch Analyse des Helligkeitsprofils des Grobbildes eine Grobmaske bestimmt, die eine Änderung des Helligkeitsprofils beschreibt. Diese Grobmaske wird dann auf das Grobbild angewendet. Basierend auf der bestimmten Grobmaske wird also ein korrigiertes Grobbild bestimmt. Basierend auf der Analyse dieses Grobbildes und/oder der Grobmaske wird dann eine weitere Grobmaske bestimmt, die beispielsweise die Änderung des Farbtons in Abhängigkeit von dem durch das korrigierte Grobbild beschriebenen Helligkeitsprofil und/oder durch das durch die erste Grobmaske festgelegte Ausmaß der Änderung des Helligkeitsprofils festgelegt wird.

Ein weiteres Beispiel der Korrektur einer Bildeigenschaft in Abhängigkeit von einer anderen Bildeigenschaft ist die Korrektur der Helligkeit als Funktion des Farbtons. Vorzugsweise wird eine Korrekturmaske, die die Änderung eines Helligkeitsprofilsund/oder Schärfeprofils beschreibt, in Abhängigkeit vom Farbton bestimmt. Die Elemente der Korrekturmaske werden also insbesondere in Abhängigkeit von dem Farbton bestimmt, der jeweilig bei dem Bildteil gegeben ist, der dem jeweiligen Element der Korrekturmaske zugeordnet ist. Beispielsweise gibt es für die Gesichtsfarbe Sollbereiche für den Kontrast und/oder die Helligkeit. Die Korrekturmaske, die die Helligkeit und/oder den Kontrast korrigiert, wird also dann so gestaltet, dass zumindest eine Annäherung an vorgegebene Sollwerte oder Sollbereiche erzielt wird. Beispielsweise sind bei Blitzlichtaufnahmen häufig die Gesichter überbelichtet und bei Gegenlichtaufnahmen die Gesichter unterbelichtet. Die Gesichtserkennung kann dann über den Farbwert insbesondere Farbton und/oder Farbsättigung erfolgen. Entsprechend wirken Himmelpartien, die ebenfalls über den Farbwert, insbesondere Farbton und/oder Farbsättigung erkannt werden können, häufig als zu dunkel oder zu hell und wirken somit "ausgewaschen". Das Grün von Vegetation ist beispielsweise häufig in den Schattenbereichen zu schwarz. Auf Grund des Farbwerts, insbesondere Farbton und/oder Farbsättigung kann die Vegetation erkannt werden und die Schattenbereiche können dann (z. B. mittels Hilfsmasken) farbwertabhängig (farbtonabhängig und/oder farbsättigungsabhängig) aufgehellt werden.

Charakteristische Farbtöne/Farbwerte für charakteristische Bildteile, wie z.B. Haut, Vegetation, Himmel, Strand, Straßen, in einer Vielzahl von fotografischen Bildern, sind nicht auf einen Punkt im Farbraum beschränkt sind. Basierend auf einer statistischen Analyse einer Vielzahl von fotografischen Bildern wurden Zuordnungsvorschriften erstellt, die festlegen, ob ein gewisser Bildpunkt zu einer charakteristischen Farbe zu zählen ist oder nicht. Vorzugsweise werden die Zuordnungsvorschriften als Verteilungen im Farbraum mathematisch formuliert. Farbwerte, insbesondere Farbtöne und/oder Farbsättigung, die innerhalb eines Bereichs (eindimensional oder zweidimensional oder dreidimensional) im Farbraum liegen, der durch die Verteilung festgelegt ist, werden als zu der charakteristischen Farbe zugehörig betrachtet, die dieser Verteilung zugeordnet ist. Zur Analyse der Bilddaten werden vorzugsweise mehrere Verteilungen für verschiedene charakteristische Farben (z.B. Hautfarben, Vegetationsfarben usw.) bereitgestellt und die Farbwerte der Bildelemente werden dahingehend untersucht, ob sie einer bestimmten charakteristischen Farbe zugeordnet werden können (insbesondere auch in welchen Maße diese Zuordnung gilt, siehe unten).

Die Farbtöne in dem Bild werden basierend auf den zu korrigierenden Bilddaten oder auf Bilddaten, die von den zu korrigierenden Bilddaten abgeleitet wurden, bestimmt. Beispielsweise werden die Farbtöne in den oben erwähnten Grobbildern bestimmt und dann wird analysiert, ob unter den bestimmten Farbtönen welche sind, die zu dem charakteristischen Farbton gehören, also so beispielsweise unter die Verteilung fallen.

Die Elemente der Korrekturmaske oder der Grobkorrekturmaske, auf der dann basierend die Korrekturmaske berechnet wird, werden dann in Abhängigkeit davon bestimmt, ob die den Maskenelementen zugeordneten Bildteile dem charakteristischen Farbton zugeordnet sind oder nicht. Vorzugsweise legen die Elemente der Korrekturmasken die Änderung der Helligkeit und/oder des Kontrastes in Abhängigkeit davon fest, ob die zugeordneten Bildteile zu dem charakteristischen Farbton gehören oder nicht. Vorzugsweise erfolgt dies unter der Berücksichtigung der Soll-Helligkeit und/oder des Soll-Kontrastes, der dem charakteristischen Farbton zugeordnet ist. Vorzugsweise werden in diesem Fall zur Bestimmung der Korrekturmaske (oder Grobkorrekturmaske) Hilfsmasken eingesetzt, deren Elemente festlegen, welche Feinbildelemente (oder Grobbildelemente) zum charakteristischen Bildbereich gehören und welche nicht oder wie stark der Grad der Zugehörigkeit ist.

Werden also beispielsweise mehrere verschiedene charakteristische Farbtöne in dem Bild erkannt, so wird beispielsweise jedem charakteristischem Farbton eine Soll-Helligkeit und/oder ein Soll-Kontrast zugeordnet. Anhand der für jeden charakteristischen Farbton vorhandenen Zuordnungsvorschrift wird dann festgestellt, welche Bildteile zu welchem charakteristischen Farbton gehören.

Vorzugsweise wird die Zuordnungsvorschrift nicht nur als Ja-/Nein-Vorschrift gestaltet, sondern die Zuordnungsvorschrift legt den Grad der Zugehörigkeit eines Farbtons zu einem charakteristischen Farbton fest. Dieser Grad der Zugehörigkeit kann durch einen Zugehörigkeitsfaktor (z. B. "Hautindikator") festgelegt werden. Dieser kann beispielsweise auf Grund einer statistischen Analyse bestimmt werden. Je nachdem, wie häufig ein Farbton zu einem charakteristischen Farbton zu zählen war, wird sein Zugehörigkeitsfaktor bestimmt. Beispielsweise kann der Zugehörigkeitsfaktor also die Wahrscheinlichkeit der Zugehörigkeit eines Farbtons zu einer Farbtongruppe festlegen. Die Helligkeit und/oder der Kontrast werden dann vorzugsweise sowohl unter Berücksichtigung der Soll-Helligkeit und/oder des Soll-Kontrastes als auch unter Berücksichtigung des Zugehörigkeitsfaktors bestimmt, der für das zu bestimmende Maskenelement der Korrekturmaske oder Grobkorrekturmaske gegeben ist. Dabei ist der Zugehörigkeitsfaktor einem Farbton zugeordnet. Der Farbton ist einem Bildelement zugeordnet und das Bildelement ist wiederum dem zu bestimmenden Maskenelement zugeordnet. Falls beispielsweise der Zugehörigkeitsfaktor eine geringe Zugehörigkeit anzeigt, erfolgt nur eine geringe Änderung der Helligkeit und/oder des Kontrasts in Richtung auf die Soll-Helligkeit und/oder den Soll-Kontrast.

Erfindungsgemäß kann die durch die Korrekturmaske erzielte Änderung auch von einer farbton-unabhängigen Erkennung charakteristischer Bildteile abhängig gemacht werden. Beispielsweise können Gesichter durch Mustererkennungsverfahren oder Strukturerkennungsverfahren erkannt werden. Die Maskenelemente der Korrekturmaske oder Grobkorrekturmaske, die dann den charakteristischen Bildteil, wie z.B. ein Gesicht, betreffen, werden dann anders bestimmt als Maskenelemente, die keinen charakteristischen Bildteil betreffen. Wie bereits oben erwähnt, können z.B. Bildteile, die als Teile eines Gesichts erkannt werden, bei der Korrektur der Helligkeit und des Kontrasts so behandelt werden, wie dies bereits oben im Zusammenhang mit den charakteristischen Farbtönen erläutert wurde, ohne dass aber auf eine Farbtoninformation zurückgegriffen wird. Entsprechend lassen sich andere charakteristische Bildteile, wie z.B. Straßen oder Pflanzen, letztere beispielsweise an strukturellen Merkmalen, ohne Rückgriff auf Farbtoninformation oder wahlweise auch in Kombination damit erkennen. Bildelemente, die charakteristischen Bildteilen zugeordnet werden, werden dann Soll-Bildeigenschaften, wie z.B. Soll-Helligkeit oder Soll-Kontrast, zugeordnet. Die Elemente der Korrekturmaske oder Grobänderungsmaske werden dann so gestaltet, dass sie eine Änderung der Bilddaten oder Grobbilddaten bewirken, die zu einer Annäherung an die Sollwerte führt. Der Grad der Annäherung kann dann, wie bereits oben beispielhaft beschrieben, von dem Grad der Zugehörigkeit zu einem charakteristisch Bildteil abhängig gemacht werden.

Der qualitative Eindruck eines Bildes hängt wesentlich von der Häufigkeitsverteilung von Bildeigenschaften ab. Beispielsweise wurde eine Steigerung der Bildqualität beobachtet, wenn die Helligkeitsverteilung in einem Bild einer Gleichverteilung der Helligkeit angenähert wird. Dabei bedeutet eine Gleichverteilung, dass jeder durch die Bilddaten darstellbare Helligkeitswert in dem Bild gleich häufig vorkommt.

Allgemein beschreibt die Häufigkeitsverteilung die Häufigkeit eines Wertes als Funktion der durch den Wert bestimmten Bildeigenschaft. Die Werte quantifizieren eine Bildeigenschaft in einem bestimmten Bildteil. Die Änderung mittels der Korrekturmaske wird dabei vorzugsweise so durchgeführt, dass die Häufigkeitsverteilung einer Soll-Verteilung, beispielsweise einer Gleichverteilung, angenähert wird. Vorzugsweise werden für die verschiedenen Bildeigenschaften jeweils geeignete Soll-Verteilungen festgelegt. Beispielsweise ist für den Detailkontrast eine Soll-Verteilung wünschenswert, bei der mittlere Kontrastwerte häufiger auftreten als extreme Kontrastwerte.

Der Erfinder hat festgestellt, dass bei dem erfindungsgemäßen Korrekturverfahren eine Verbesserung des Korrekturergebnisses erzielt werden kann, wenn der Wertebereich, den Bildeigenschaften einnehmen, vor der Durchführung der Korrektur gespreizt wird. Dies gilt insbesondere, wenn es sich bei der Bildeigenschaft um die Helligkeit handelt. Beispielsweise entstehen manche fotografische Bilder unter ungünstigen Belichtungsund Beleuchtungsbedingungen, die dazu führen, dass der Dynamikbereich nicht vollständig ausgenutzt wird.

Bevorzugt werden verschiedene Masken (Korrekturmasken und/oder Grobmasken) kombiniert, wobei die verschiedenen Masken unterschiedliche Korrektureigenschaften haben. Beispielsweise werden Masken zur Streckung, zur Helligkeitsänderung, zur Änderung der Häufigkeitsverteilung kombiniert. Die Kombination kann so erfolgen, das Korrekturmasken kombiniert werden. Bevorzugt werden jedoch die Grobmasken kombiniert. Aus der dann hervorgehenden Grobmasken, die mehrere oder eine Vielzahl von Korrekturen umfasst, wird dann eine Korrekturmaske abgeleitet, die dann ebenfalls diese mehreren Korrekturen durchführt. Bevorzugt erfolgt die Kombination so, dass für jede Korrektur die Anteile getrennt werden, die mit unterschiedlichen mathematischen Operationen verknüpft sind, und die Anteile, die sich auf die gleiche mathematische Operation beziehen, werden jeweils kombiniert. Beispielsweise wird also der additive Anteil einer jeden Korrektur zu einer gemeinsamen additiven Maske kombiniert und der multiplitive Anteil einer jeden Korrektur wird zu einer gemeinsamen multiplikativen Maske kombiniert. Beispielsweise wird also der additive Anteil einer Helligkeitskorrektur mit dem additiven Anteil einer Farbkontrastkorrektur zu einer gemeinsamen additiven Maske kombiniert. Dies kann auf der Ebene der Korrekturmasken (Feinbild-Niveau) erfolgen, bevorzugt erfolgt dies aber auf der Ebene der Grobmasken (Grobbild-Niveau). Im letzteren Fall wird dann aus der gemeinsamen, additiven Grobmaske (kombinierte Maske) die gemeinsame (kombinierte) additive Korrekturmaske abgeleitet. Entsprechend wird der multiplikative Anteil der Helligkeitskorrektur und der Farbkontrastkorrektur zu einer gemeinsamen multiplikativen Maske kombiniert. Bevorzugt erfolgt dies wiederum auf der Ebene der Grobbilder, also wird eine gemeinsame multiplikative Maske berechnet, aus der dann die gemeinsame, multiplikative Korrekturmaske abgeleitet wird.

Vorzugsweise wird deshalb erfindungsgemäß eine Spreizung des Wertebereichs oder Dynamikbereichs vor Durchführung der Korrektur oder an einer geeigneten Stelle innerhalb der Korrektur, falls z.B. mehrere Korrekturmasken angewendet werden, durchgeführt. Diese Spreizung betrifft vorzugsweise alle Bildelemente des Feinbildes.

Die Spreizung wird mittels einer Spreizungsfunktion erzielt. Diese Spreizungsfunktion wird vorzugsweise aus einem unscharfen Datensatz (Grobbilddaten) abgeleitet, der durch die Anwendung eines Unschärfeverfahrens (Detailentfernungsverfahrens) auf die zu spreizenden Bilddaten erzielt wird. Ein Unschärfeverfahren ist beispielsweise ein Tiefpassfilterverfahren, ein Gauß-Filterverfahren, ein Unterabtastverfahren bzw. Downsamplingverfahren usw. Das Unschärfeverfahren führt dazu, dass extreme Werte innerhalb des verunschärften Bildbereichs nicht vollständig zum Tragen kommen. Dadurch wird der Einfluss von Rauschen oder Störungen auf das Spreizungsverfahren gemindert. Die tatsächlichen Extremwerte werden dadurch bei der Bestimmung der Spreizungsfunktion nicht berücksichtigt. Dasselbe gilt für reale Bilddetails, die diese Extremwerte im zu spreizenden Bild einnehmen.

Damit auch nach der Spreizung diese gewünschten Bilddetails noch im Feinbild zumindest in einem gewissen Umfang sichtbar sind, also durch die Spreizung nicht über den Rand des Wertebereichs "hinausgeschoben" werden, wird erfindungsgemäß die Spreizungsfunktion so gestaltet, dass die gespreizten, unscharfen Bilddaten (Grobbilddaten) zumindest an einem Rand des Wertebereichs nicht die Extremwerte des maximal möglichen Wertebereichs einnehmen. Sie liegen also innerhalb des maximal möglichen Wertebereichs und die Randwerte der gespreizten, unscharfen Bilddaten (gespreizte Grobbilddaten) sind vorzugsweise von den Extremwerten des maximal möglichen Wertebereichs beabstandet. Durch die Einstellung dieses Abstandes ist es möglich, einerseits störende oder ungewünschte Ausreißer in den Werten des Feinbildes nicht so deutlich hervortreten zu lassen, wenn der Abstand klein eingestellt wird. Andererseits werden durch Erhöhen des Abstandes gewünschte Details im Feinbild deutlicher sichtbar. Vorzugsweise ist deshalb der Abstand zu mindestens zu einem der Ränder des maximal möglichen Wertebereichs einstellbar. Die Einstellung kann adaptiv, z.B. in Abhängigkeit von der Klasse des Bildes (Sonnenuntergangsbild, Gegenlichtbild, Blitzlichtbild usw.) und/oder in Abhängigkeit einer Analyse des Bildes oder Grobbildes, z. B. einer Analyse der lokalen Verteilung einer Bildeigenschaft, insbesondere der zu spreizenden Bildeigenschaft, und/oder z. B. der Analyse der Häufigkeitsverteilung, einer Bildeigenschaft erfolgen. Bevorzugt hängt der Abstand von mindestens einer Bildeigenschaft (lokalen oder globalen Bildeigenschaft) ab.

Hängt der Abstand von einer lokalen Bildeigenschaft ab, so werden bevorzugt für die jeweiligen Bildteile spezifische Spreizungsfunktionen bestimmt, die jeweils von der mindestens einen lokalen Bildeigenschaft abhängen. Beispielsweise kann eine bereits bestimmte Spreizungsmaske in Abhängigkeit von einer Hilfsmaske korrigiert werden, wobei die Hilfsmaske die mindestens eine lokale Bildeigenschaft darstellt, in Abhängigkeit von der ein Abstand oder die Abstände bestimmt werden.

Erfindungsgemäß kann auch die Spreizung basierend auf den Feinbilddaten bestimmt werden. Die Spreizung erfolgt dann vorzugsweise ebenfalls so, wie oben beschrieben. Das heißt, die Spreizung nutzt nicht den maximalen möglichen Wertebereich, sondern ein gewisser Abstand zu den Extremwerten des maximal möglichen Wertebereichs oder zumindest zu einem Extremwert wird eingehalten. Vorzugweise ist dieser Abstand steuerbar, insbesondere steuerbar in Abhängigkeit von mindestens einer Bildeigenschaft, insbesondere lokal steuerbar in Abhängigkeit von lokalen Bildeigenschaften.

Erfolgt eine Spreizung für jeden Farbkanal getrennt (z. B. getrennt für r, g oder b) also eine Spreizung von Farbintensitäten, so wird bevorzugt der Abstand zu den jeweiligen Extremwerten der einzelnen Farbkanäle einstellbar gestaltet. Vorzugsweise hängt der Abstand wiederum von lokalen Bildeigenschaften ab. Vorzugweise werden die Abstände individuell für die Farbkanäle eingestellt. Auf dieser Art und Weise kann verhindert werden, dass durch die Spreizung eines Farbkanals ein Farbstich erzeugt wird.

Die obige Beschreibung bezog sich hauptsächlich auf die Spreizung der Bildeigenschaftshelligkeit und Farbintensität. Entsprechend können natürlich andere Bildeigenschaften, wie z. B. die Farbsättigung gespreizt werden.

Bei der Bildeigenschaft, die zu spreizen ist, kann es sich beispielsweise um die Helligkeit handeln. Es kann aber z.B. auch eine Spreizung für verschiedene Farben gesondert erfolgen, beispielsweise eine Spreizung des Wertebereichs für die rote Farbe, blaue Farbe und grüne Farbe, jeweils getrennt. Insbesondere dann kann der Parameter, der den oben genannten Abstand steuert, von einer Analyse der lokalen Farbtonverteilung im Bild (z.B. die Erkennung eines Farbstichs) oder einer Verteilung anderer Bildeigenschaften, wie z.B. Farbsättigung, insbesondere der Analyse der Häufigkeitsverteilung (z. B. einer Farbe oder einer Helligkeit), abhängig gemacht werden. Vorzugsweise fließt bei der Analyse der Häufigkeitsverteilung einer Farbe oder der Analyse der Farbtonverteilung in der Farbebene, Information über charakteristische Bildbereiche (z. B. Himmel) und charakteristische Farben (z. B. himmelblau) mit ein, um zu verhindern, dass ein vermeintlicher Farbstich korrigiert wird.

Die Erfindung betrifft auch eine Vorrichtung (z. B. Computer mit Hardware und Software) zum ortsabhängigen Korrigieren fotografischer Bilddaten, die das oben genannte Verfahren durchführt. Die Vorrichtung weist insbesondere eine Korrekturmasken-Bestimmungseinheit auf, die eine Korrekturmaske mit einer Vielzahl von Korrekturelementen aus den zu korrigierenden fotografischen Bilddaten oder daraus abgeleiteten Bilddaten bestimmt. Hierzu umfasst die Korrekturmasken-Bestimmungseinheit vorzugsweise eine Speichereinheit, die es erlaubt, die Korrekturelemente abzuspeichern. Vorzugsweise umfasst sie weiter eine Berechnungseinheit, die eine Berechnung der Korrekturelemente aus den Bilddaten erlaubt.

Weiter umfasst die Vorrichtung vorzugsweise eine Anwendungseinheit, die die Korrekturmaske auf die Bilddaten anwendet. Um die dabei vorzunehmenden mathematischen Operationen durchzuführen, greift die Anwendungseinheit dabei vorzugsweise auf eine mathematische Berechnungseinheit, beispielsweise einen numerischen Prozessor zurück.

Die Erfindung betrifft weiter ein Programm, das einen Computer veranlasst, das erfindungsgemäße Verfahren durchzuführen, sowie ein Computerspeichermedium, auf dem das Programm gespeichert ist.

Die Erfindung betrifft weiter Bilddarstellungsgeräte, wie fotografische Printer (DMD-Printer, CRT-Printer, Laserdrucker, Tintenstrahldrucker, fotografische Printer usw.) und Monitore (LC-Monitor, CRT-Monitor) und Kombinationen aus Monitor und Computer (Datenverarbeitungsgeräte), insbesondere PC. Die Erfindung betrifft insbesondere fotografische Labors, wie Großlabors, Minilabs und Mikrolabs. Diese Printer und Labors umfassen die erfindungsgemäße Vorrichtung oder Steuereinrichtungen, die das erfindungsgemäße Verfahren durchführen oder Computer oder Datenverarbeitungsgeräte, die das erfindungsgemäße Programm geladen haben oder auf denen dieses Programm läuft.

Bei der folgenden Beschreibung von Ausführungsformen werden weitere Vorteile und Merkmale der vorliegenden Erfindung erläutert. Dies erfolgt in Verbindung mit den Figuren.

Fig. 1a    zeigt einen RGB-Farbwürfel;
Fig. 1b    zeigt die Wirkung additiver Masken;
Fig. 1c    zeigt die Wirkung multiplikativer Masken;
Fig. 2     zeigt die Projektion des RGB-Würfels auf die Farbebene;
Fig. 3     zeigt Farbton und Farbsättigung in der x,y-Farbebene;
Fig. 4a    zeigt die Wirkung erfindungsgemäßer additiver Masken,
Fig. 4b    zeigt die Wirkung erfindungsgemäßer multiplikativer Masken;
Fig. 5a    zeigt die Wirkung einer additiven Maske, die zum Strecken des Dynamikbereichs verwendet wird;
Fig. 5b    zeigt die Wirkung einer additiven Maske zur Histogramm-Gleichverteilung;
Fig. 6a    zeigt die Auswirkung einer radikalen Ausgleichung der Häufigkeitsverteilung;
Fig. 6b    zeigt die Wirkung einer sanften Ausgleichung der Verteilung;
Fig. 7a    zeigt die Verteilung charakteristischer Farben in der Farbebene;
Fig. 7b    zeigt die Farbebene in einem RGB-Farbwürfel;
Fig. 8     zeigt den Ablauf einer lokalen Schärfesteuerung;
Fig. 9     zeigt ein Ausführungsbeispiel für das erfindungsgemäße Korrektursystem;
Fig. 10    zeigt das Prinzip der Spreizung des Dynamikumfangs.

Mit der hierin offenbarten rein digitalen Maskierung eröffnen sich fast unbeschränkte Möglichkeiten der Bildmanipulation und Bildverbesserung. Es können zum selben Zweck, wie z.B. Kontrastreduktion, Hervorhebung von Details in den Schatten und Lichtern, Korrektur unzureichender Szenenausleuchtung, allgemeine Verbesserung des ästhetischen Eindrucks eines Bildes, eine Reihe von Verfahren eingesetzt werden.

Vorzugsweise wird das erfindungsgemäße Verfahren zur Verbesserung von Amateurbildern eingesetzt, insbesondere von Amateurbildern, die mittels Digitalkameras erzielt wurden. Das erfindungsgemäße Verfahren kann aber auch (direkt oder mit geringfügigen Parameteranpassungen) im Falle anderer Bildquellen zur Anwendung kommen, wie z.B. Flachbettscanner, Diascanner, Camcorder und Negativscanner. Im letzteren Fall sollte das zu verarbeitende Bild als Erstes einer globalen Balancekorrektur (insbesondere in Farbe und Dichte) unterworfen werden. Eine derartige Balancekorrektur wird von konventionellen automatischen fotografischen Printern durchgeführt und ist z.B. aus EP 0 475 897 und EP 0 586 773 bekannt.

Das erfindungsgemäße Verfahren ist nicht auf ein spezielles Ausgabemedium (Bildschirm, Fotopapier, Tintenstrahldruck usw.) ausgelegt. Vorzugsweise wird jedoch angenommen, dass das Ausgabemedium eine Wiedergabe mit näherungsweise fotografischer Qualität erlaubt, also die an ein fotografisches Bild gesetzten Anforderungen insbesondere hinsichtlich Farbtonpalette, Farbsättigungsbereich, Helligkeitsbereich, Bildauflösung und Kontrast erfüllt. Dadurch kann mit den heute standardmäßig angewandten Verfahren des Colormanagements (z.B. ein ICC-Profil, siehe Homepage des International Color Consortium, http://www.color.org) eine visuell sehr ähnliche Wiedergabe auf unterschiedlichen Medien erreicht werden.

Im folgenden wird das Prinzip der unscharfen Maskierung veranschaulicht. Die unscharfe Maskierung erlaubt es, räumlich grobe Gesamt-Bildinformationen und damit auch typischerweise große Dynamikschwankungen von räumlich feinen Teilbild-Informationen und damit typischerweise kleineren Dynamikbereichen zu trennen. Neben dem in diesem Beispiel angewendeten Prinzip des Downsamplings können auch andere Verfahren, wie z.B. Filterverfahren oder Filterbänke, wie sie in EP 0 971 315 erläutert sind, angewendet werden. Beim Downsampling werden die Bilddaten einer Vielzahl benachbarter Bildelemente (insbesondere gewichtet) gemittelt und der Mittelwert ist ein Bilddatum, das einem Element des so enthaltenen Grobbildes zugeordnet ist. Die Korrekturmasken der vorliegenden Erfindung sind bevorzugt unscharfe Masken. Sie beruhen also bevorzugt auf Bilddaten, die aus den Originalbilddaten durch ein Detailentfernungsverfahren (z. B. Downsampling) gewonnen wurden.

Nimmt man beispielsweise an, dass eine Blitzaufnahme einen unterbelichteten Hintergrund aufweist, in dem sich Details befinden, dann werden diese Details nach einer aufhellenden Korrektur durch eine unscharfe Maske zur Geltung gebracht. Analog können Details in überbelichteten Bildbereichen durch eine Abdunklung mittels einer unscharfen Maske besser sichtbar gemacht werden. Nebst der Hervorhebung von Details in den Lichtern und Schatten wird auch eine allgemeine Verbesserung des ästhetischen Eindrucks erreicht, denn mit aufgehelltem Hintergrund wirkt eine Blitzaufnahme freundlicher und ein ansonsten ausgewaschen wirkender Himmel zeigt wieder etwas Farbe.

Da die Maske nur räumlich grobe Bildinformation enthält, was im Folgenden vereinfachend als "Unschärfe" bezeichnet wird, wirkt sich die Maske nicht nachteilig auf die lokale Detailinformation, das heißt insbesondere die räumlich höher frequenten Komponenten, im Bild aus.

Für die Berechnung einer unscharfen Maske muss auch nicht das voll aufgelöste Originalbild (typischerweise 1024 x 1280 Pixel) vorliegen, ein auflösungsmäßig stark (das heißt beispielsweise ein bis zwei Größenordnungen) reduziertes Bild (typischerweise 40 x 50) reicht dazu aus. Dies wirkt sich günstig auf die von der Bildanalyse beanspruchten Rechen- und Speicherkapazitäten aus.

Vorzugsweise wird eine Maske basierend auf der Bildanalyse des auflösungsmäßig stark reduzierten Bildes (Grobbild) bestimmt. Eine derartige Maske wird hierin auch als "Grobmaske" bezeichnet. Bevor die Grobmaske auf das Originalbild angewandt wird, wird sie vorzugsweise in eine Maske (Korrekturmaske) umgewandelt, die an die Auflösung des Originalbildes angepasst ist, insbesondere dieser Auflösung entspricht, d. h. die gleich Bildelementzahl hat. Dazu wird ein Datenausweitungsverfahren verwendet. Beispielsweise wird ein geeignetes Interpolationsverfahren angewendet, um auf die ursprüngliche Auflösung "hochzusampeln".

Bevorzugt werden bei dem erfindungsgemäßen System und bei dem erfindungsgemäßen Verfahren zumindest ein Großteil der benötigten Bildanalysen und vorzugsweise alle Bildanalysen basierend auf mittel bis niedrig aufgelösten Versionen des Originalbildes durchgeführt. Dabei entspricht beispielsweise eine mittlere Auflösung einer Reduktion der ursprünglichen Auflösung um den Faktor 3 bis 10 und eine niedrige Auflösung einer Reduktion der Auflösung um den Faktor 10 bis 100. Alternativ kann die niedrige Auflösung auch so definiert werden, dass sie beispielsweise weniger als 50.000 Bildpunkte, vorzugsweise weniger als 10.000 Bildpunkte, umfasst, während die mittlere Auflösung unter einer Million Bildpunkte und vorzugsweise mehr als 10.000 Bildpunkte, aber weniger als 200.000 Bildpunkte umfasst. Der Begriff "Bildpunkt" wird hierin gleichbedeutend mit "Bildelement" oder "Pixel" verwendet.

Die Korrekturmaske, bei der es sich bevorzugt um eine unscharfe Maske handelt, die - wie oben erwähnt wurde - bestimmt werden kann, muss nicht unbedingt eine "Helligkeitsmaske" sein, wie dies bei der obigen Beschreibung der Aufhellung oder Abdunklung einer Blitzaufnahme erläutert wurde. Allgemein kann es sich um eine Korrekturmaske handeln, welche zur lokalen Beeinflussung einer oder mehrerer bestimmter Bildeigenschaften, wie Helligkeit, Farbton, Farbsättigung, Schärfe, Kontrast, Detailkontrast usw., dient. Beispielsweise kann eine Korrekturmaske gemäß dem erfindungsgemäßen Verfahren zur lokalen Steuerung der Bildschärfung verwendet werden. Auch kann eine Korrekturmaske zum Zwecke einer lokalen Farbtonkorrektur eingesetzt werden. Beispielsweise kann in einem Sonnenuntergangsbild die Position der Sonne und des die Sonne umgebenden Himmels durch Farbtonanalyse und/oder Muster- bzw. Strukturerkennung bestimmt werden. Der Farbtonverlauf vom Sonnenzentrum bis in von der Sonne entfernte Bereiche des Himmels kann bevorzugt anhand eines Grobbildes analysiert werden. Soll-Verläufe des Farbtonverlaufs vom Sonnenzentrum zu entfernten Bereichen des Himmels können basierend auf einer Analyse einer Vielzahl von Sonnenuntergangsbildern festgelegt werden. Der bestimmte Ist-Verlauf kann mit dem Soll-Verlauf verglichen werden und darauf basierend kann zuerst eine Grobkorrekturmaske und dann eine Korrekturmaske bestimmt werden, deren Elemente die Farbtöne lokal so ändern, dass sich eine Annäherung an den Soll-Verlauf ergibt. Erfolgt die Analyse des Farbtonverlaufs an Hand eines Feinbildes, so kann die Korrekturmaske natürlich auch direkt, wenn auch mit höherem Rechenaufwand, aus den Feinbilddaten berechnet werden.

Im folgenden werden Typen von Korrekturmasken beschrieben. Beispielhaft erfolgt dies anhand einer Korrekturmaske, die der Beeinflussung der Helligkeit dient. Dabei soll bei diesem Beispiel der Farbton der einzelnen Pixel durch die Anwendung der Korrekturmaske auf das Bild nicht beeinflusst werden. Die Erfinder haben herausgefunden, dass sich eine Erhöhung der Farbsättigung durch Anwendung der Korrekturmaske in Bildbereichen mit bestimmten Bildeigenschaften, insbesondere in unterbelichteten und überbelichteten Bereichen des Bildes, im Allgemeinen positiv auf den ästhetischen Eindruck auswirken.

Farbbilder können in unterschiedlichen (dreidimensionalen) Farbräumen dargestellt werden. Im Wesentlichen kann man zwischen drei Typen von Farbräumen unterscheiden:

1. Aufnahmegeräte-abhängige Farbräume. Bei diesen wird jedes Pixel durch drei Farbwerte charakterisiert, welche direkt den Messwerten in Rot, Blau und Grün des Aufnahmegeräts entsprechen.

2. Aufnahmegeräte-unabhängige Farbräume. Bei diesen werden aufnahmegeräteabhängige Farbwerte (so gut wie möglich) in einen normierten Farbraum transformiert, welcher dem menschlichen Farbempfinden angepasst ist. Am gebräuchlichsten ist der "CIELab"-Farbraum. Die L-Komponente ("Luminanz") ist hier ein der Empfindlichkeit des Auges angepasstes Helligkeitsmaß. Entsprechend wird eine Maske zur Beeinflussung der Helligkeit einzig auf diese Komponente wirken.

3. Wiedergabegeräte-angepasste Farbräume. Bei diesen können die drei Farbwerte der Pixel ohne weitere Anpassung und Transformation an einen bestimmten Typ von Ausgabegerät übertragen werden und ergeben dort ein farblich von einem menschlichen Betrachter als "richtig" empfundenes Bild.

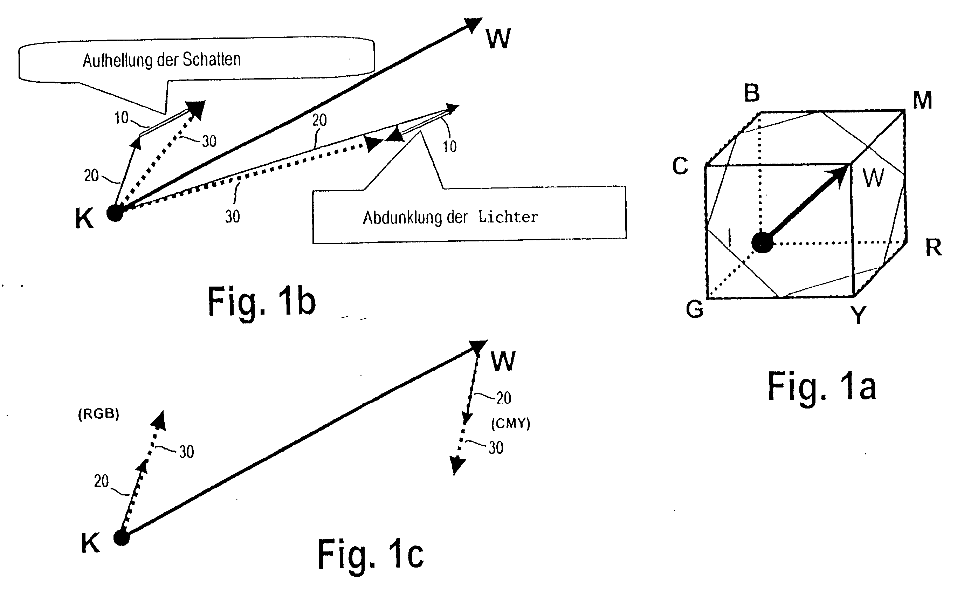

Bei den Digitalkameras hat sich der sog. "sRGB"-Farbraum durchgesetzt (siehe http://www.color.org). Dieser Farbraum kombiniert die oben unter 2. und 3. genannten Vorteile, da er einerseits farbmetrisch definiert ist (die Umrechnung in CIELab und umgekehrt ist durch Formeln definiert), andererseits aber eine Darstellung auf einem typischen Farbmonitor mit minimalem Aufwand möglich ist. Die Farbe eines Pixels wird durch ein rgb-Trippel charakterisiert, wobei r, g und b ganzzahlige Werte im Bereich 0 ... 255 sind. Das Tripel (0,0,0) stellt "schwarz" dar (K), das Tripel (255,255,255) stellt "weiß" (W) dar. Der entsprechende rgb-Farbwürfel ist in Fig. 1a zu sehen. Der Vektor von K nach W läuft von schwarz über Zwischengrautöne nach weiß.

Die im Folgenden beschriebenen Verfahren können in verschiedenen Farbräumen durchgeführt werden. Die Farbräume, die hier der Berechnung zugrunde gelegt werden, sind (bevorzugt) dreidimensional. Bevorzugt ist ein Farbraum, bei dem eine Koordinate die Helligkeit beschreibt, die anderen zwei die Farbe (also insbesondere Farbton und Farbsättigung). Beispielsweise können RGB-Farbwerte durch die weiter unten noch beschriebene Transformation in einen derartigen Farbraum übergeführt werden. Beispielsweise hat der Lab-Farbraum die obige Eigenschaft. Die Multiplikation eines Farbvektors (Lab) mit f > 1 führt zu einer Erhöhung sowohl der Helligkeit (L) als auch der Farbsättigung $(a^2 + b^2)^{1/2}$. Im RGB- wie auch beispielsweise in CMY-Farbraum stellen die Koordinaten nicht direkt die "Farbe" dar, sondern sie bestimmen auch die Helligkeit. Eine Trennung zwischen Farbe und Helligkeit kann z. B. durch die weiter unten angegebene Transformation durchgeführt werden.

Beispielsweise erfolgt die Bildanalyse und die Maskenberechnung bei dem in EP 1 024 400 und EP 0 475 897 beschriebenen System im durch die ersten drei Koeffizienten der Karhunen-Loève-Transformation der spektralen Filmdichten aufgespannten Farbraum.

Die folgende, rein beispielhafte Ausführungsform des hier beschriebenen Verfahrens beruht auf einem Farbwürfel, z.B. dem in Fig. 1a gezeigten RGB-Farbwürfel, das heißt die Originalbilder und die verarbeiteten Bilder liegen in einer Form vor, wie sie die Kamera liefert.

In einem solchen Farbraum müssen für die Begriffe "Helligkeit", "Farbton" und "Farbsättigung" sinnvolle Maße definiert werden können. Im Falle des dargestellten RGB-Würfels wird für die "Helligkeit" folgendes Maß verwendet:

$$L = (r + g + b)/3$$

Dies ist bis auf einen konstanten Faktor die Projektion des Farbvektors (r, g, b) auf die "Grauachse" KW. Anstelle von r, g und b können natürlich auch andere unabhängige Farben verwendet werden, die einen Farbraum aufspannen, wie z.B. C (Cyan), M (Magenta) und Y (Gelb). Je nach Definition der Farben ist dann natürlich darauf zu achten, dass im Gegensatz zum RGB-Farbraum höhere Werte einen dunkleren Bildpunkt darstellen als niedrigere Werte. Die Definition des Helligkeitsmaßes L ist dann dementsprechend anzupassen. Die folgende Erläuterung der Ausführungsform wird beispielhaft für den (r,g,b)-Farbvektor fortgesetzt.

Beispielsweise können anstelle des gewöhnlichen Mittelwerts auch ein gewichteter Mittelwert, nach einem beliebigen Mittelungsverfahren, verwendet werden, beispielsweise $L = \alpha*r + \beta*g + \gamma*b$ mit $\alpha + \beta + \gamma = 1$. Dabei könnte beispielsweise der Grün-Komponente ein höheres Gewicht beigemessen werden, und zwar in Anbetracht der Tatsache, dass das Auge im Grünen am empfindlichsten auf Helligkeitsunterschiede reagiert.

Die Erfinder haben festgestellt, dass eine Gleichgewichtung der Farben zur Bestimmung eines Helligkeitsmaßes zumindest für einen additiven Farbraum, wie dies bei dem RGB-Farbraum der Fall ist, zu sehr guten Ergebnissen führt.

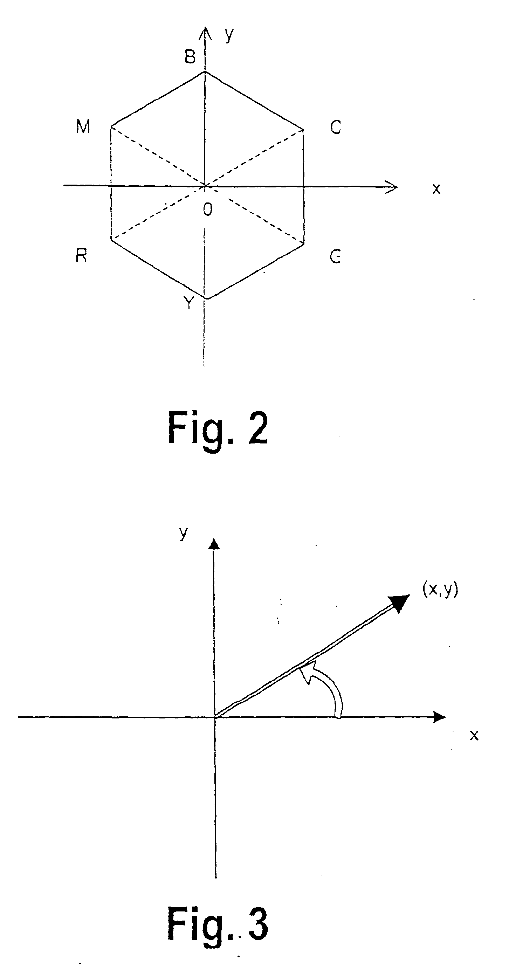

Um neben der Bildeigenschaft "Helligkeit" die Bildeigenschaft "Farbe" analysieren zu können, werden vorzugsweise die rgb-Vektoren auf eine Ebene senkrecht zur Grauachse KW projiziert, wie dies in Fig. 2 gezeigt ist.

In Matrixnotation lässt sich die Transformation eines rgb-Trippels in einen Helligkeitswert L und zwei Farbkoordinaten (x, y) wie folgt darstellen:

$$\begin{bmatrix} L \\ x \\ y \end{bmatrix} = \begin{bmatrix} \dfrac{1}{3} & \dfrac{1}{3} & \dfrac{1}{3} \\ -\cos(30°) & +\cos(30°) & 0 \\ -\dfrac{1}{2} & -\dfrac{1}{2} & 1 \end{bmatrix} * \begin{bmatrix} r \\ g \\ b \end{bmatrix}$$

Vorzugsweise wird die Farbsättigung als Abstand des Farbpunktes (x, y) vom Ursprung 0 der Farbebene definiert. Der Farbton wird vorzugsweise durch den Winkel definiert, den der Farbvektor mit einer Achse durch den Ursprung bildet (siehe Fig. 3). Bei der Maskierung, wie sie bei der analogen Fotografie beim Belichtungsvorgang eingesetzt wird, und bei der Hybridmaskierung, wie sie beispielsweise aus EP 1 024 400 bekannt ist, ist nur eine Art der Verknüpfung von Maske und Bild möglich, nämlich die Multiplikation der entsprechenden Transmissionen oder äquivalent dazu die Addition der entsprechenden optischen Dichten, da mit der Maske ein Helligkeitsprofil des Belichtungslichtes nur lokal durch Abschwächung geändert werden kann.

In dem hierin beschriebenen, rein digitalen Bereich der Maskierung ist sowohl eine additive als auch eine irgendwie anders geartete mathematische Verknüpfung, insbesondere eine multiplikative Verknüpfung zwischen Originalbild und Korrekturmaske möglich. Wie in Fig. 1b dargestellt, bewirkt die Addition eines "Maskenvektors" 10 mit gleichen Komponenten in r, g und b zu einem "Bildvektor" 20 eine Veränderung der Helligkeit, während der Farbton und die Farbsättigung unverändert bleiben. Das heißt, der Farbton und die Farbsättigung des resultierenden Bildvektors 30 entsprechen dem Farbton und der Farbsättigung des ursprünglichen Bildvektors 20.

Die Multiplikation eines Bildvektors mit einem "Maskenfaktor" ist in Fig. 1c dargestellt. Die Multiplikation bewirkt eine Änderung des ursprünglichen Vektors 20 in den nach der Multiplikation resultierenden Vektor 30. Dadurch wird ebenfalls eine Änderung der Helligkeit bewirkt. Auch wird der Farbton unverändert gelassen. Jedoch wirkt sich die Multiplikation zudem auf die Farbsättigung aus.

Wie bereits erwähnt, ist eine Erhöhung der Farbsättigung insbesondere in den überbelichteten (hellen) und unterbelichteten (dunklen) Bereichen eines Bildes grundsätzlich erstrebenswert. In unterbelichteten Bereichen führt eine Multiplikation eines rgb-Vektors mit einem Faktor > 1 sowohl zu einer Erhöhung der Helligkeit als auch zu einer Erhöhung der Farbsättigung. Es werden somit die beiden angestrebten Ziele gleichzeitig erreicht. In überbelichteten Bereichen müsste jedoch ein Faktor < 1 verwendet werden, da eine Reduktion der Helligkeit angestrebt wird. Ein Faktor < 1 würde sich aber negativ auf die Farbsättigung auswirken.

Erfindungsgemäß wird deshalb bei einer Überbelichtung, das heißt insbesondere dann, wenn das Maß für die Helligkeit größer als ein mittlerer Helligkeitswert oder ein Schwellenwert ist, z.B. für L > 255/2 nicht nur der rgb-Vektor gestreckt, sondern, wie in Fig. 1c dargestellt, der dazu komplementäre cmy-Vektor gestreckt. Dadurch können wiederum beide angestrebten Ziele gleichzeitig erreicht werden.

Für eine Überbelichtung erfolgt beispielsweise die multiplikative Maskierung wie folgt:

$$\begin{bmatrix} c \\ m \\ y \end{bmatrix} = \begin{bmatrix} r \\ g \\ b \end{bmatrix} - \begin{bmatrix} 255 \\ 255 \\ 255 \end{bmatrix}$$

$$\begin{bmatrix} c^1 \\ m^1 \\ y^1 \end{bmatrix} = \begin{bmatrix} c \\ m \\ y \end{bmatrix} * f \qquad f > 1$$

$$\begin{bmatrix} r^1 \\ g^1 \\ b^1 \end{bmatrix} = \begin{bmatrix} c \\ m' \\ y' \end{bmatrix} + \begin{bmatrix} 255 \\ 255 \\ 255 \end{bmatrix}$$

Die oben genannten korrigierten Trippel ($r^1$, $g^1$, $b^1$) können im Falle der Überbelichtung auch wie folgt dargestellt werden:

$$\begin{bmatrix} r^1 \\ g^1 \\ b^1 \end{bmatrix} = f \begin{bmatrix} r \\ g \\ b \end{bmatrix} - \begin{bmatrix} 255 \\ 255 \\ 255 \end{bmatrix} (f-1)$$

Die Werte "255" stellen nur Beispiele für Maximalwerte dar. Da der Faktor f > 1 ist, ist der rechte Term größer 0 und führt somit zu einer Abdunklung, die die durch den linken Term bewirkte Aufhellung überkompensiert. Dadurch wird zum einen durch den Faktor f eine Erhöhung der Farbsättigung erzielt als auch eine Abdunklung, die eine Funktion von f ist und insbesondere proportional zu f ist. Damit wird erreicht dass der Umfang der Korrektur der Farbsättigung eine Funktion des Umfangs der Korrektur der Helligkeit ist.

Wie weiter unten noch ausgeführt wird, erfolgt die Maskierung bei einer Überbelichtung und Unterbelichtung vorzugsweise multiplikativ mit f > 1, um eine Erhöhung der Farbsättigung zu erreichen. Entsprechend ließe sich eine Verringerung der Farbsättigung durch eine Multiplikation mit f > 1 erzielen, falls dies erwünscht wäre. In einem Bereich mittlerer Helligkeit, der außerhalb der oben erwähnten Schwellenwerte liegt, also beispielsweise in etwa bei L = 255/2, wird eine additive Maskierung bevorzugt, da dadurch die Farbsättigung nicht beeinflusst wird. Erfindungsgemäß findet also vorzugsweise eine Korrektur der Bildeigenschaft "Farbsättigung" in Abhängigkeit von der Bildeigenschaft "Helligkeit" statt. Neben den bereits erwähnten Vorteilen, wie Erhöhung der Farbsättigung bei Unterbelichtung und Überbelichtung hat eine derartige Vorgehensweise bei der Korrektur folgende zusätzliche Begründung.

Das korrigierte Bild sollte vorzugsweise dasselbe Datenformat aufweisen wie das Originalbild, das heißt beispielsweise, dass die RGB-Werte des korrigierten Bildes auf den Bereich der Werte des unkorrigierten Bildes, beispielsweise 0 bis 255, begrenzt sein sollten. Bei der Verknüpfung zwischen Korrekturmaske und zu korrigierendem Bild sollten deshalb Ergebnisse, die diesen Bereich überschreiten, durch ein sog. "Clipping" bzw. "Abschneiden" begrenzt werden. Wird dieses Clipping zu oft und zu massiv angewandt, so kann dies zu störenden Artefakten im korrigierten Bild führen. Ein paar geometrische Überlegungen anhand des RGB-Würfels machen klar, dass die vorgeschlagene multiplikative Maskierung und Kombination von additiver und multiplikativer Maskierung dem Anliegen, massives und häufiges Clipping zu vermeiden, sehr entgegenkommt. So kann man sich klarmachen, dass, falls der Vektor eine mittlere Helligkeit beschreibt eine Addition eher dazu führt, dass der geänderte Vektor sich noch innerhalb des RGB-Würfels befindet, während bei einer Multiplikation ein erhöhtes Risiko besteht, dass der Vektor den RGB-Würfel nach der Korrektur verlässt. Entsprechend gilt bei Vektoren, die eine starke Helligkeit darstellen, dass ein CMY-Multiplikativ dafür sorgt, dass der korrigierte Vektor innerhalb des RGB-Würfels bleibt, während bei einem RGB-Multiplikativ das Risiko bestehen würde, dass der RGB-Würfel verlassen werden würde, also ein "clipping" auftritt.

Gemäß einer Ausführungsform wird die Maske als Funktion der Helligkeit im Bild definiert. Beispielsweise kann die Grobmaske als Funktion der Helligkeit im (niedrig aufgelösten oder tiefpassgefilterten) Grobbild definiert werden. In einem erfindungsgemäßen Programm können derartige Funktionen über Tabellen (LUT für "Look Up Table") gespeichert werden.

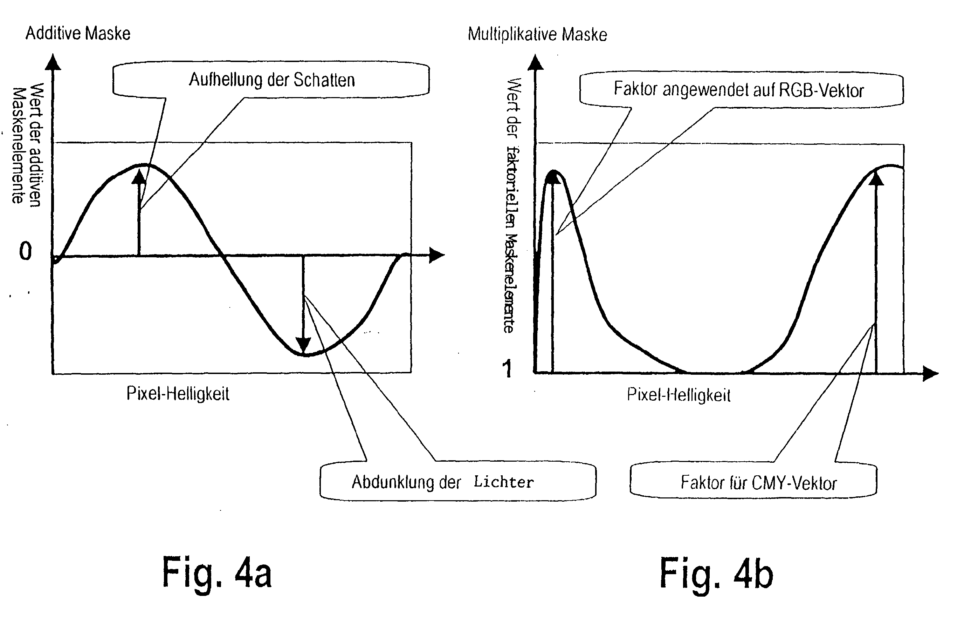

Gemäß einer Ausführungsform hat eine Funktion zur Berechnung additiver Masken (Grobkorrekturmasken, Korrekturmasken) als Funktion der Helligkeit folgende Eigenschaften (siehe Fig. 4a):

    a) Im Bereich geringer Helligkeit sind die Elemente der Maske positiv und nehmen mit abnehmender Helligkeit ab und verschwinden bei L = 0.
    b) Im Bereich hoher Helligkeit sind die Elemente negativ, sie nehmen mit zunehmender Helligkeit zu und verschwinden bei L = 255.
    c) Die Elemente der Maske nehmen im Bereich mittlerer Helligkeit kleine Werte an, die im Vergleich zu dem korrigierenden Helligkeitswert klein sind, oder sie nehmen den Wert 0 an. Der Übergang zwischen positiven und negativen Werten erfolgt in etwa im Bereich mittlerer Helligkeit.

Die unter a) und b) genannten positiven und negativen Extremwerte führen zu stärkeren Änderungen. Die Funktion ähnelt vorzugsweise einer Sinusfunktion.
Durch die oben genannte Ausführungsform wird erreicht, dass eher unterbelichtete Bereiche aufgehellt werden, normal belichtete Bereiche wenig verändert werden und überbelichtete Bereiche abgedunkelt werden. Die oben genannte Bedingung für die Funktion f, nämlich f(L) = 0 (also sehr klein im Vergleich zum Maximalwert) für L = 0 (oder ungefähr gleich 0) und L = 255 (also gleich dem Maximalwert oder ungefähr gleich dem Maximalwert) ist nicht zwingend, hat aber insbesondere die folgenden beiden Vorteile. Zum einen soll, wie oben bereits diskutiert wurde, die Korrektur in den stark unterbelichteten und stark überbelichteten Bereichen vorzugsweise so erfolgen, dass nicht nur eine Änderung der Helligkeit bewirkt wird, sondern auch die Farbsättigung erhöht wird. Im Falle der obigen Ausführungsform bedeutet dies, dass die Korrektur vorzugsweise durch einen Faktor in der oben beschriebenen Art und Weise erfolgen sollte und nicht (rein) additiv. Zum anderen wird durch die obige Bedingung sowohl "schwarz" als auch "weiß" durch die Maske nicht verändert. Wird ein Digitalkamerabild auf einem Farbmonitor wiedergegeben, so wird dessen effektive Aussteuerung durch die Maskierung nicht vermindert. Bei anderen Anwendungen z.B. bei der Wiedergabe von Negativfilmvorlagen auf einem Fotopapier kann hingegen eine solche Dynamikreduktion erwünscht sein.

Die Funktion zur Berechnung multiplikativer Masken, die ebenfalls über LUTs realisiert werden kann, hat als Funktion der Helligkeit vorzugsweise die folgenden Eigenschaften (siehe Fig. 4b):

    a) Die Elemente, die als Faktor im oben genannten Sinne dienen, sind ≥ 1.
    b) Die Elemente erreichen ihr Maximum bei oder sehr nahe bei L = 0 und L = 255.
    c) Sie fallen gegen das Zentrum hin relativ schnell ab, wobei im Bereich mittlerer Helligkeit der Faktor vorzugsweise 1 oder in etwa 1 beträgt.

Die obige Eigenschaft a bewirkt, dass in den überbelichteten Bereichen nur eine Abdunklung, in den unterbelichteten Bereichen nur eine Aufhellung des Bildes stattfindet. In beiden Fällen ist dies jedoch mit einer Erhöhung der Schärfe und der Farbsättigung verbunden. Die Erhöhung der Schärfe ergibt sich dadurch, dass die Änderung der Helligkeit proportional zum Faktor ist, wodurch sich Differenzen in der Helligkeit zwischen benachbarten Pixeln, die ein Maß für die Schärfe darstellen, ebenfalls proportional zu dem Faktor erhöhen. Bei einer reinen Addition würden die Differenzen konstant bleiben, so dass sich dadurch die Schärfe nicht erhöhen würde.
Die oben genannten Eigenschaften b) und c) sorgen dafür, dass sich die multiplikative Maskierung auf die extremern Belichtungswerte beschränkt. Bei Farbvektoren, die einen Farbwert in einem Farbraum beschreiben, dessen Dimensionen Farben darstellen, wie z.B. bei einem RGB-Farbraum oder CMY-Farbraum, ist eine Multiplikation mit einem Faktor > 1, der eine Erhöhung der Farbsättigung bewirkt, dann nicht gut, wenn der Betrag des Vektors oder einzelner Komponenten des Vektors deutlich über mittleren Werten des Wertebereichs oder am Rande des Wertebereichs liegt. Denn durch die Multiplikation könnte der Vektor den maximal darstellbaren Wertebereich verlassen, so dass die oben genannten Clippingeffekte auftreten. Außerdem werden bevorzugt normal belichtete Bereiche nicht maskiert, denn in diesen Bereichen kann mit einer guten Wiedergabe der Bildinformation zumindest hinsichtlich Helligkeit und Farbsättigung gerechnet werden.

In den Abbildungen 4a und 4b sind die oben genannten Funktionen veranschaulicht. Die Abbildung 4a betrifft die additive Maske und die Abbildung 4b betrifft den multiplikativen Faktor für die multiplikative Maske zur Änderung sowohl der Helligkeit als auch der Farbsättigung.

Die Abbildung 4b zeigt für die multiplikative Maske noch einen steilen Abfall des Faktors für L → 0. Ein derartiger Verlauf wird vorgezogen, um in den unterbelichteten Bereichen eine Verstärkung des Rauschens zu vermeiden. Eine analoge Maßnahme kann für extreme Überbelichtungen L → 255 getroffen werden.

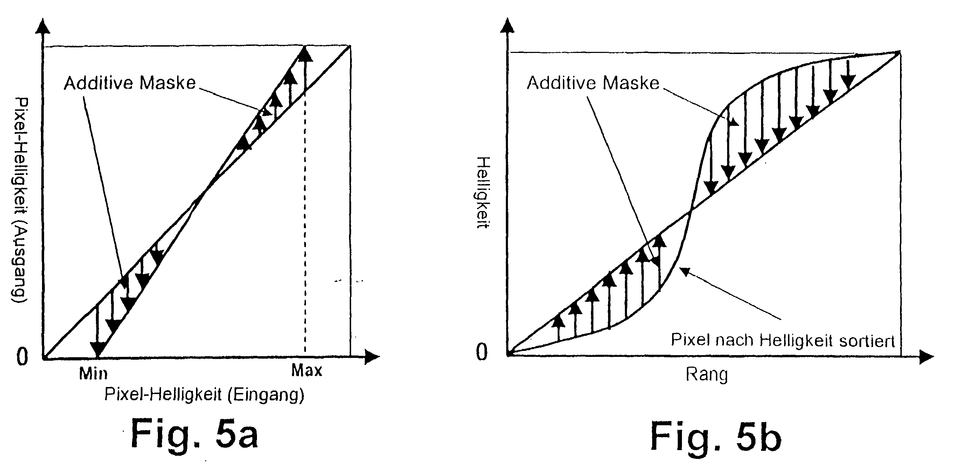

Die Fig. 5a zeigt ein einfaches Verfahren zur besseren Nutzung der zur Verfügung stehenden Dynamik oder anders ausgedrückt, zur Ausweitung des tatsächlichen Wertebereichs einer Bildeigenschaft. Die Fig. 5a betrifft die Helligkeit. Auf der Ordinate ist die Helligkeit nach der Korrektur aufgetragen und auf der Abszisse vor der Korrektur. Auf der durch 0 hindurchgehenden Diagonale liegen die Werte der Bildeigenschaft vor der Korrektur. Bei dem in Fig. 5a gezeigten Beispiel nutzen sie nur den Bereich zwischen Min und Max. Um den Wertebereich zu erweitern, wird eine additive Maske angewendet, die die mit den Pfeilen angedeutete Eigenschaft hat und die dazu führt, dass der vollständige Wertebereich ausgenutzt wird. Die in Fig. 5a gezeigte Zielkurve, von den Pfeilspitzen berührt wird und die das Ergebnis nach der Korrektur anzeigt, ist linear. Dies ist jedoch nicht zwingend. Vorzugsweise ist jedoch die Funktion monoton ansteigend. Für andere Anwendungen (z.B. falls das Digitalbild von einem Negativscanner stammt) kann die Korrekturmaske auch so gewählt werden, dass sich anstelle einer Dynamikerhöhung eine Dynamikverminderung ergäbe. Dadurch kann eine Anpassung des großen Dynamikumfangs eines Negativfilms an den geringeren Dynamikumfang, der z.B. durch ein Fotopapier darstellbar ist, erzielt werden.

Die Fig. 5b illustriert ein Verfahren der Maskenberechnung, das mit dem Ziel durchgeführt wird, die Häufigkeitsverteilung der Werte einer Bildeigenschaft, im vorliegenden Beispiel der Helligkeitswerte im Bild auszugleichen oder allgemeiner diese Häufigkeitsverteilung zu beeinflussen. Vorzugsweise erfolgt diese Beeinflussung so, dass eine Annäherung an eine Soll-Häufigkeitsverteilung erzielt wird, die z.B. eine Gleichverteilung sein kann.

Um eine Häufigkeitsverteilung zu analysieren und zu bestimmen, kann beispielsweise mittels eines Sortierverfahrens für jedes Bildelement im Originalbild und vorzugsweise auf Grund des geringeren Rechenaufwands und des geringeren Einflusses von Detailinformation im Grobbild der Rang eines jeden Bildelements in der Gesamtheit der Bildelemente ermittelt werden. Dabei werden Bildelemente mit einem höheren Wert (höherer Helligkeit) als ranghöher angesehen, als solche mit einem geringeren Wert (geringere Helligkeit).

Trägt man die Helligkeit der Bildelemente in Funktionen des Pixelranges auf, so resultiert eine monoton zunehmende Funktion, wie sie z.B. in Fig. 5b als geschwungene Funktion zu sehen ist. Diese Funktion entspricht der inversen kumulativen Häufigkeitsverteilung der Helligkeiten der Bildelemente. Wären die Helligkeitswerte gleich verteilt, so ergäbe sich die bei 0 beginnende gerade, diagonale Linie, die ebenfalls in Fig. 5b zu sehen ist. Mit einer Maske (in der ersten Stufe beispielsweise Grobmaske, dann die daraus ermittelte Korrekturmaske), welche die Helligkeiten der Bildelemente entsprechend den in der Figur dargestellten Pfeilen korrigiert, kann eine Gleichverteilung der Helligkeitswerte (im Falle der Grobmaske eine Gleichverteilung der Helligkeitswerte des niedrig aufgelösten Bildes) erreicht werden. Es wird somit eine Annäherung der Verteilung der Werte einer Bildeigenschaft an eine Soll-Verteilung erzielt.

Bei dem in Fig. 5 b gezeigten Beispiel kann dies mittels einer additiven Maske erzielt werden, die die in Fig. 5b mit Pfeilen angedeutete Wirkung auf die geschwungene Ist-Verteilung ausübt. Dabei wird vorzugsweise eine additive Grobmaske in einem ersten Schritt basierend auf der Analyse der Häufigkeitsverteilung in einem Grobbild bestimmt. Dann wird aus der Grobmaske mittels eines Ausweitungsverfahrens die Korrekturmaske ermittelt. Bei dem in Fig. 5b gezeigten Beispiel handelt es sich um eine additive Maske. Jedoch kann auch wie im vorerwähnten Fall (zusätzlich oder alternativ) eine multiplikative Maskierung erfolgen, die die Korrektur verschiedener Bildeigenschaften miteinander verknüpft, also insbesondere die Korrektur der Helligkeit mit der Korrektur der Farbsättigung verknüpft. Wie im vorhergehenden Fall kann eine derartige Verknüpfung sowohl vom Absolutwert einer Bildeigenschaft (beispielsweise Absolutwert der Helligkeit) als auch vom Umfang der Korrektur einer Bildeigenschaft abhängig gemacht werden.

Wie bereits oben angedeutet, wird es erfindungsgemäß bevorzugt, die Berechnungen auf Grund eines Bildes durchzuführen, das keine Detailinformation enthält, also beispielsweise eines niedrig aufgelösten Bildes, so dass eine daraus bestimmte Korrekturmaske nur den Grobverlauf der Bildeigenschaft (hier: Helligkeit) beeinflusst, aber nicht die Detailinformation im Bilde. Beispielsweise kann die Korrekturmaske durch Interpolation ("Upsampling" und "Smoothing") aus der niederfrequenten Maske (Grobmaske) entstehen. Nach Anwendung der (unscharfen) Korrekturmaske auf das zu korrigierende Bild sind dessen Helligkeitswerte im Falle des Beispiels der Fig. 5b somit nicht gleich verteilt, da die Detailinformation nicht verloren gegangen ist. Es ergibt sich aber eine Veränderung der Helligkeitsverteilung in Richtung der Gleichverteilung.

Die in Fig. 5b dargestellte Zielfunktion muss, wie oben erwähnt, nicht unbedingt linear sein. Durch die Wahl einer (monoton zunehmenden) nicht-linearen Zielfunktion kann im Prinzip jede beliebige (insbesondere eine näherungsweise gauß'sche) Verteilung der Werte der Bildeigenschaft (beispielsweise Helligkeitsverteilung) angestrebt oder angenähert werden.

Das oben erwähnte Korrekturverfahren, das die Häufigkeitsverteilung einer Bildeigenschaft berücksichtigt, wirkt sich im Allgemeinen sehr positiv aus, kann aber in gewissen Fällen zu massiv sein. Dem kann beispielsweise folgendermaßen abgeholfen werden.

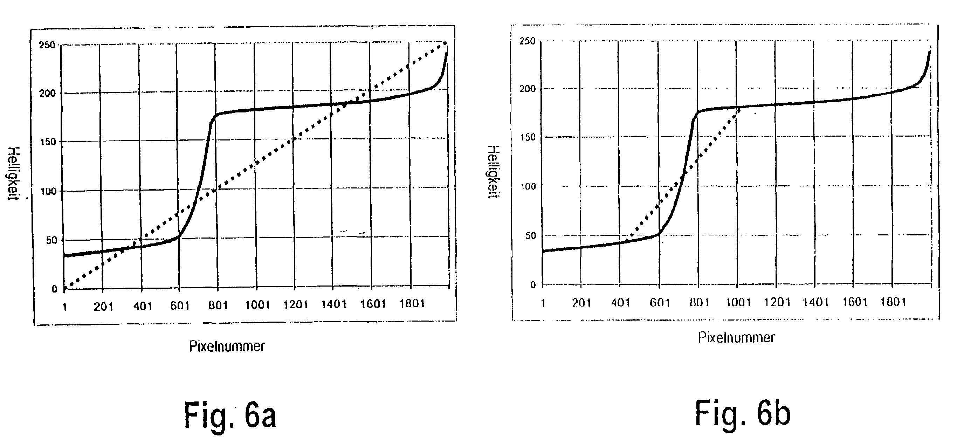

Die durch die berechnete Maske (insbesondere Grobmaske) erzielte Korrektur kann abgeschwächt werden, indem die Maske derart geändert wird, dass beispielsweise eine Begrenzung nach oben und/oder unten für die Elemente der Maske eingeführt wird. Beispielsweise können die Elemente der Maske auch durch Multiplikation mit einem konstanten Faktor < 1 geändert werden oder die genannten beiden Maßnahmen können durchgeführt werden. Zum anderen kann eine Abhilfe dadurch erzielt werden, dass die Zielfunktion bis zu einem gewissen Grad der ursprünglichen (inversen) Verteilungsfunktion angepasst wird oder angenähert wird. Ein Beispiel hierfür ist in Fig. 6a und 6b gezeigt. Fig. 6a zeigt gestrichelt eine geradlinige, "radikale" Zielfunktion und die durchgezogene Linie zeigt die Ist-Verteilung, die in die durch die Zielfunktion dargestellte Sollverteilung übergeführt werden soll oder dieser angenähert werden soll. Fig. 6b zeigt gestrichelt eine "sanftere" Zielfunktion, die der durchgehend gezeichneten Ist-Verteilung angenähert ist (ca. Pixelnummer 400 bis 1.000) und ansonsten mit diesen übereinstimmt. Solange die Ist-Kurve nicht mehr als einen vorgegebenen Wert von ihrem Minimum oder Maximum abweicht, folgt vorzugsweise (z. B. in Fig. 6b) die Soll-Kurve der Ist-Kurve, dazwischen kann wiederum ein linearer Verlauf der Soll-Kurve gewählt werden.

Das eben zuletzt genannte Verfahren hat insbesondere den Vorteil, dass es sich gut in die oben erwähnten Konzepte der Erfindung einfügt, wonach in den stark überbelichteten und unterbelichteten Bereichen eine multiplikative Maskierung verwendet werden sollte und somit von einer Korrektur, die keinen Einfluss auf die Farbsättigung hat, abgesehen werden sollte.

Alternativ könnte eine sanftere Annäherung an eine Gleichverteilung auch dadurch realisiert werden, indem die Ist-Kurve oder Ist-Verteilung einem mathematischen Glättungsverfahren unterzogen wird, wobei dann die geglättete Kurve die Soll-Kurve darstellt.

Über- oder Unterschwinger, die durch die Maskierung entstehen können und somit zu Artefakten führen, können durch die Verwendung von Minimumfiltern und Maximumfiltern beseitigt oder vermindert werden, wie dies in EP 1 024 400 erläutert ist.

Da die oben beschriebenen verschiedenen Maskenarten, insbesondere die additiven und multiplikativen Maskenarten jeweils anders wirken und je nach den Umständen mehr oder weniger vorteilhaft eingesetzt werden können, wird eine Kombination, insbesondere gewichtete Kombination der unterschiedlichen Masken bevorzugt. Gemäß einer Ausführungsform werden verschiedene Masken, die verschiedene Korrekturen bewirken, kombiniert, insbesondere gewichtet kombiniert. Die Kombination erfolgt durch mathematische Verknüpfung, insbesondere Addition. Das Resultat der Kombination ist wiederum eine Maske. Bei den kombinierten Masken und der resultierenden Maske kann es sich um Korrekturmasken oder Grobkorrekturmasken handeln.

Die Gewichtung wurde von den Erfindern auf Grund der Sichtung einer großen Anzahl digitaler Bilder optimiert, wobei eine möglichst große Bildverbesserung bei gleichzeitiger Minimierung störender Artefakte erreicht wurde.

Vorzugsweise erfolgt zudem eine Klassifizierung, insbesondere automatische Klassifizierung der Bilder. Die Gewichte werden dann je nachdem für die verschiedenen Klassen von Bildern separat optimiert. Beispielsweise werden für die verschiedenen Klassen die Gewichte in Tabellenform abgelegt und können für die jeweilige Klasse gesondert aufgerufen werden.

Vorzugsweise werden erfindungsgemäß charakteristische Bildbereiche erkannt und nach gesonderten Kriterien durch das erfindungsgemäße Maskenkorrekturverfahren behandelt. Die charakteristischen Bildbereiche können aus benachbarten Bildelementen bestehen, müssen aber nicht. Üblicherweise ist ein Großteil der Bildpunkte (z. B. bei Haut) benachbart. Charakteristische Bildbereiche sind beispielsweise Gesichter. Sie stellen häufig den für den Betrachter wichtigsten Teil des Bildes dar. Sie weisen aber in Originalbildern häufig nicht die gewünschte Helligkeit auf. Insbesondere ist bei Blitzaufnahmen das Gesicht häufig überbelichtet und bei Gegenlichtaufnahmen ist das Gesicht häufig unterbelichtet. Ein anderes Beispiel für einen charakteristischen Bildbereich sind Himmelpartien. Diese wirken häufig entweder zu dunkel oder zu hell und damit häufig "ausgewaschen". Ein weiteres Beispiel für einen charakteristischen Bildbereich ist die Vegetation. Besonders in Schattenbereichen weist diese häufig ein schwärzliches Grün auf.

In all den oben genannten Fällen ist es von Vorteil, wenn man den charakteristischen Bildbereich erkennt und in Abhängigkeit davon bei der Korrektur entsprechende Konsequenzen zieht. So gibt es beispielsweise eine Reihe von Gesichtserkennungsverfahren, die insbesondere auf Mustererkennung basieren und nicht notwendigerweise eine Farbtoninformation benötigen. Auch Vegetation kann z.B. über typische strukturelle Merkmale erkannt werden, die keine Information über den Farbton benötigen. Im folgenden wird jedoch eine Ausführungsform beschrieben, die die Farbtoninformation nutzt, um dann in Abhängigkeit von der Farbtoninformation eine Korrektur einer anderen Bildeigenschaft, in dem vorliegenden Beispiel eine Korrektur der Helligkeit in Abhängigkeit von der Farbtoninformation vorzunehmen.

Ein besonderer Aspekt der vorliegenden Erfindung liegt also darin, dass für die Maskenbestimmung auch farbliche Information mit einbezogen wird. Diese wird insbesondere dazu genutzt, charakteristische Farbtöne zu erkennen. Da das vorliegende Korrekturverfahren eine lokale Korrektur ermöglicht, können damit Teile des Bildes, die den charakteristischen Farbton aufweisen, korrigiert werden. Dies erlaubt, anders ausgedrückt, eine spezifische Korrektur charakteristischer Bildbereiche.

Am Beispiel von Hautfarbe wird im Folgenden eine bevorzugte Vorgehensweise konkreter erläutert.

Es wird zunächst eine (beispielsweise additive) Maske, die zu einer Helligkeitskorrektur führt, wie in den vorangehenden Abschnitten beschrieben, bestimmt, ohne dass farbliche Information berücksichtigt wird. Anhand des niedrig aufgelösten Bildes (Grobbildes) wird eine "Hautmaske" (Haut-Grobmaske) beispielsweise wie folgt berechnet:

- Auf Grund der den einzelnen Bildelementen zugeordneten Farbwerten (beispielsweise Koordinaten in der oben beschrieben Farbebene) wird jedem Pixel ein Wert zwischen beispielsweise 0 und 1 zugeordnet, dabei bedeutet ein Wert von 1, dass es sich mit großer Wahrscheinlichkeit um Hautfarbe handeln könnte, ein Wert von 0 bedeutet dahingegen, dass es sich mit größter Wahrscheinlichkeit nicht um Hautfarbe handelt.
- Dann wird der Wert dieses "Hautindikators", der von 1 bis 0 läuft, an der dem Bildelement entsprechenden Stelle der Hautmaske (Haut-Grobmaske) eingetragen.

Anschließend wird die oben erwähnte, ursprünglich berechnete Maske, die der Helligkeitskorrektur dient, und ohne Berücksichtigung farblicher Information bestimmt wurde (wo nötig), unter Berücksichtigung der oben erwähnten Farbinformation korrigiert, und zwar wie folgt:

- Auf jedes Bildelement des niedrig aufgelösten Bildes (Grobbildes) wird die Helligkeitsmaske (Helligkeits-Grobmaske) angewandt und die Differenz zwischen der resultierenden Helligkeit und der für die Haut optimalen Helligkeit wird ermittelt.
- Diese Differenz wird mit dem entsprechenden Wert des Hautindikators multipliziert, eventuell noch begrenzt und/oder mit einem konstanten Faktor abgeschwächt (analog zu dem obigen Ausführungsbeispiel, um Extreme zu vermeiden) und dann zum ursprünglichen Wert der Helligkeitsmaske addiert.

Die resultierende (korrigierte) Helligkeitsmaske wird dann auf das Originalbild oder Originalgrobbild angewendet. Masken, die sich auf charakteristische Bildbereiche beziehen, wie z.B. Hautmasken, Himmelmasken oder Vegetationsmasken, können auch für andere Zwecke nutzbringend eingesetzt werden, nämlich beispielsweise bei der Bestimmung einer Maske, die der Bildschärfung dient. Denn häufig ist es beispielsweise unerwünscht, Hautbereiche zu schärfen, da ansonsten unerwünschte Details der Haut zum Vorschein kommen.

Der oben erwähnte Hautindikator stellt ein Beispiel für ein Zugehörigkeitsmaß dar, das den Grad der Zugehörigkeit eines Bildteils, das beispielsweise nur ein Bildelement enthält, zu einem charakteristischen Bildbereich festlegt. Denkbar ist natürlich auch, dass der Hautindikator nur die Werte 0 oder 1 annimmt, in diesem weniger bevorzugten Beispiel stellt dann der Hautindikator eine Ja/Nein-Zuordnungsvorschrift dar, die festlegt, welcher Farbton einem charakteristischen Farbton zuzuordnen ist oder nicht und damit welches Bildelement einem charakteristischen Bildbereich zuzuordnen ist oder nicht.

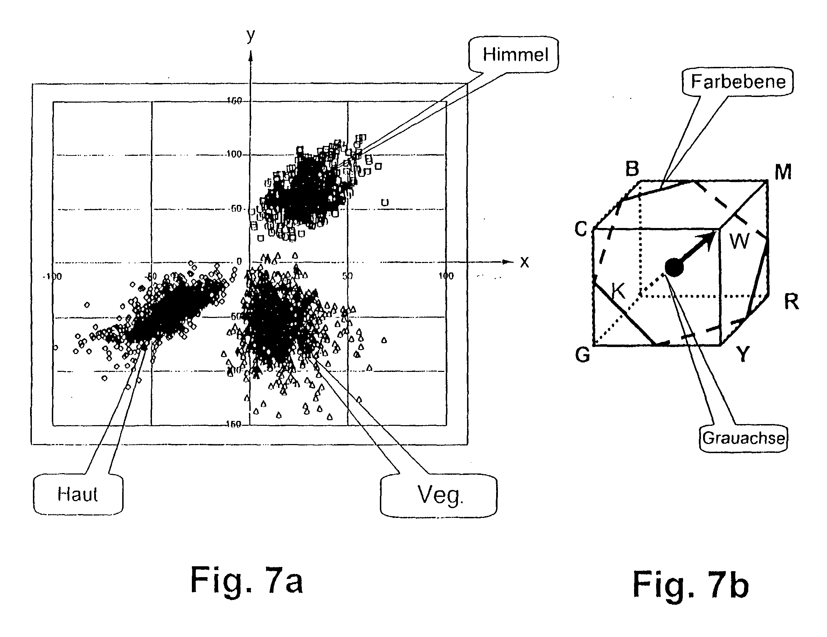

Fig. 7a zeigt eine Verteilung von Bilddaten in der xy-Farbebene, die in Fig. 7 und Fig. 2 gezeigt ist. Die Bilddaten stammen von Himmel-, Haut- und Vegetationsbereichen in Bildern, die mit digitalen Kameras erstellt wurden. Im Zentrum der Verteilungen kommt es dabei zu Häufungen. Ersichtlich ist jedenfalls, dass es relativ gut möglich ist, Bereiche zu definieren, in welchen die oben erwähnten Indikatoren 0 sein sollten. Außerdem nimmt ein derartiger Indikator (Zugehörigkeitsmaß) im Bereich des Zentrums des jeweiligen Clusters vorzugsweise den Wert 1 an.

Um die Zugehörigkeit mathematisch zu beschreiben, können beispielsweise Verteilungsfunktionen definiert werden, die als Funktion des Farbwertes das Zugehörigkeitsmaß beschreiben. Diese Verteilungsfunktionen können basierend auf statischen Analysen erstellt werden, die beispielsweise mit Glättungsverfahren und Interpolationsverfahren angepasst werden und beispielsweise in Nachschlagetabellen (LUT) abgespeichert werden. Konkret kann ein geeigneter Indikator (als Funktion der xy-Koordinaten der Farbebene) z.B. dadurch gewonnen werden, dass man eine zweidimensionale Gaußverteilung der empirischen Verteilung der Daten anpasst und die resultierende glockenförmige Funktion (auf ein Maximum für 1 normiert) als Indikatorfunktion verwendet.

Die vorliegende Erfindung betrifft die Korrektur einer Vielzahl von Bildeigenschaften mittels Masken. Im folgenden wird dies am Beispiel der Bildschärfe erläutert, die ebenfalls ein Beispiel für eine Bildeigenschaft darstellt.

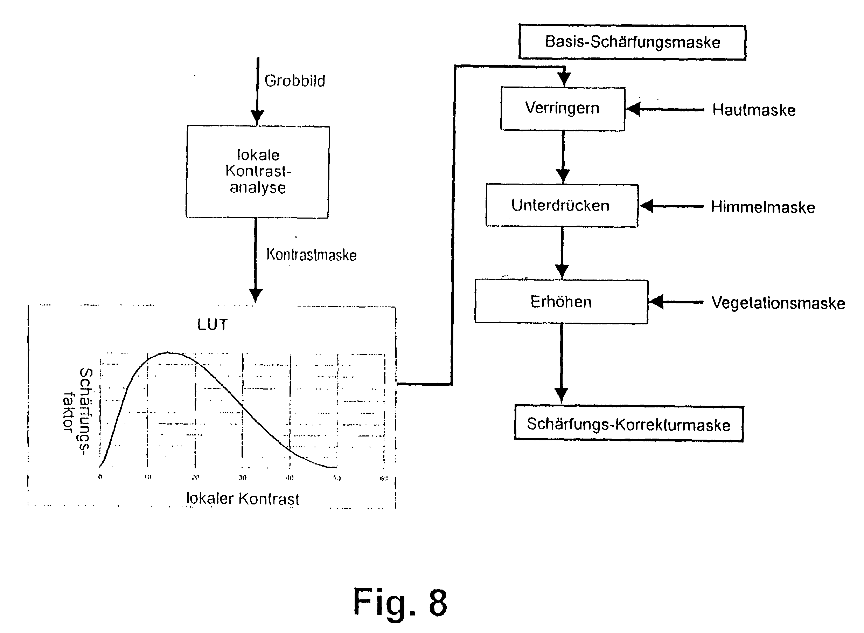

Fig. 8 zeigt ein Beispiel einer lokalen Schärfekontrolle.

Im folgenden wird beispielhaft beschrieben, wie eine Schärfungs-Korrekturmaske bestimmt wird. Die Erläuterung erfolgt im Hinblick auf die Fig. 8. Als Erstes wird eine Kontrastmaske gebildet, welche den Verlauf des lokalen Kontrastes im Bild charakterisiert. Vorzugsweise erfolgt die dazu erforderliche Analyse auf der Grundlage eines Grobbildes mit einer mittleren Bildauflösung (typischerweise 200 x 250 Pixel). Die so gewonnene Kontrastmaske entspricht der oben erwähnten Grobmaske. Die mittlere Bildauflösung ist vorzugsweise um einen Faktor 3 bis 20 kleiner als die Auflösung des Originalbildes und wird aus dem Originalbild durch ein Datenreduktionsverfahren gewonnen, beispielsweise durch "Downsampling", wobei Bilddaten des Grobbildes Mittelwerte mehrerer benachbarter Bilddaten des Feinbildes darstellen. Vorzugsweise umfasst die mittlere Bildauflösung etwa 20.000 bis 200.000 Pixel. Ein Originalbild umfasst typischerweise über eine Million Pixel und typischerweise zwischen einer Million und fünf Millionen. Als Kontrastmaß kann z.B. die Differenz zwischen maximaler und minimaler Helligkeit in einer Umgebung des betrachteten Bildpunktes verwendet werden. Es kann aber auch, wie bereits oben erläutert, ein Farbkontrast bestimmt und berücksichtigt werden.

Die so bestimmte "Kontrastmaske" wird nun über eine Funktion in eine "Basis-Schärfungsmaske" umgerechnet. Die Funktion ist vorzugsweise nichtlinear. Die Funktion kann über eine Tabelle (LUT) definiert werden. Die Elemente der Basis-Schärfungsmaske stellen Schärfungsfaktoren dar und bestimmten den Grad der Schärfung. Der Zusammenhang zwischen Schärfungsfaktoren und lokalen Kontrast ist in Figur 8 gezeigt.

Vorzugsweise haben die Schärfungsfaktoren der Basis-Schärfungsmaske die folgenden Eigenschaften:

• Der Schärfungsfaktor nimmt im Bereich kleiner Kontraste ab. Damit wird vermieden, dass in unterbelichteten Bereichen das Rauschen angehoben wird und dass homogene Bildbereiche (wie z.B. Himmel) ein "körniges" Aussehen erhalten.

• Der Schärfungsfaktor nimmt in Bereichen höherer Detailkontraste vorzugsweise monoton bis auf 0 ab. Damit wird erreicht, dass bereits scharfe Bildbereiche nicht überschärft werden und dass im Bereich scharfer Kanten keine störenden Überschwinger entstehen.

• Bevorzugt im Bereich mittlerer Detailkontrastwerte oder in etwa bei 10% bis 50%, bevorzugt bei 20% bis 40% des festgestellten Detailkontrastes nimmt die Funktion ein Maximum ein.

• Die Funktion, insbesondere nichtlineare Funktion wird vorzugsweise derart auf das Ausgabemedium angepasst und optimiert, dass eine maximale Schärfung ohne Artefakte erreicht wird. Dies geschieht vorzugsweise anhand von Testpatches. Testpatches sind Testbilder, auf die die Schärfungs-Korrekturmaske angewendet wird, die basierend auf der Basis-Schärfungsmaske bestimmt wurde. Durch visuelle oder automatische Analyse der Testpatches kann die Güte der Schärfungs-Korrekturmaske und damit der nichtlinearen Funktion bestimmt werden. Durch iterative Verfahrensweisen lässt sich somit die nichtlineare Funktion optimieren. Testpatches sind üblicherweise aus einem Streifenmuster aufgebaut, wobei die Streifen unterschiedliche Helligkeiten (Helligkeitsstufen unterschiedlicher Höhe) aufweisen.

Bei der Basis-Schärfungsmaske handelt es sich bevorzugt, wie bei der Kontrastmaske um eine Grobmaske, d.h. sie basiert auf Grobbilddaten, die keine Detailinformation enthalten. Die Grobbilddaten werden durch ein Detailentfernungsverfahren aus den Feinbilddaten bestimmt. Wurde als Detailentfernungsverfahren ein Datenreduktionsverfahren (z.B. "Downsampling") verwendet, so haben die Grobkorrekturmasken eine reduzierte Elementzahl, die vorzugsweise der Elementzahl des Grobbildes entspricht. Die Basis-Schärfungsmaske liegt bevorzugt aber nicht notwendigerweise mit dieser reduzierten Elementzahl vor. Die Basis-Schärfungsmaske wird in einem nächsten Verfahrensschritt nun korrigiert, um dann letztendlich die Schärfungs-Korrekturmaske zu erhalten. Die Korrektur wird wieder bevorzugt mit reduzierter Elementzahl durchgeführt. In diesem Fall muss dann die korrigierte Basis-Schärfungsmaske noch einem Ausweitungsverfahren (z.B. Interpolationsverfahren) unterzogen werden, um eine Schärfungs-Korrekturmaske zu erhalten, deren Elementzahl der Elementzahl des zu korrigierenden Feinbildes entspricht.

Die Basis-Schärfungsmaske wird bevorzugt basierend auf anderen Masken, sogenannten Zusatzinformationsmasken oder Hilfsmasken korrigiert. Dabei ist bevorzugt ein Element der Zusatzinformationsmaske eindeutig einem Element der Basis-Schärfungsmaske zugeordnet und beschreibt das Ausmaß der Änderung des zugeordneten Elements der Basis-Schärfungsmaske. Die Zusatzinformationsmasken (Hilfsmasken) werden bevorzugt basierend auf einen Grobbild (z. B. demjenigen, das der lokalen Kontrastanalyse zugrunde gelegt wurde), bestimmt oder basierend auf einer Analyse dieses Grobbildes. Beispielsweise können die Elemente der Zusatzinformationsmaske eine Funktion der lokalen Helligkeit oder der lokalen Farbsättigung oder des lokalen Farbtons sein. Vorzugsweise stellen die Zusatzinformationsmasken Information über den Bildinhalt dar, wie z.B. Information über charakteristische Bildbereiche, wie Haut oder Gesicht. Die Zusatzinformationsmaske wird in diesem Fall auch als Hautmaske bezeichnet. Andere Beispiele für Zusatzinformationsmasken sind die in Figur 1 gezeigten Himmelmasken und Vegetationsmasken.

Vorzugsweise wird in Bildbereichen mit Hautfarbe der Schärfungsfaktor reduziert. Damit wird der Tatsache Rechnung getragen, dass bei übermäßiger Schärfung der Eindruck "unsauberer" Haut entsteht (Pickel, Barthaare). Konkret kann diese Reduktion durch die Multiplikation des Schärfungsfaktors mit dem Ausdruck (1,0 - R x Hautindikator) erfolgen, wobei K > 1, bevorzugt 0,5 ist. Der Hautindikator ist ein Maß für die Wahrscheinlichkeit oder Zugehörigkeit eines Bildelements zu einem charakteristischen Bildbereich, der Haut darstellt. Der Wert des Hautindikators eines Bildelements kann beispielsweise anhand des Farbtons des Bildelements bestimmt werden. Vorzugsweise werden Verteilungsfunktionen oder Wahrscheinlichkeitsverteilungen vorgegeben, die festlegen, mit welcher Wahrscheinlichkeit oder mit welchem Zugehörigkeitsgrad ein gewisser Farbton zu einer charakteristischen Farbe (z.B. Hautfarbe) gehört. Je weiter ein Farbton von einem charakteristischen Farbton abweicht, desto kleiner ist typischerweise der Zugehörigkeitsgrad. Aus dieser Verteilungsfunktion oder Wahrscheinlichkeitsverteilung lässt sich dann anhand des Farbwertes ein Maß dafür bestimmen, dass ein bestimmter Farbwert zu einer charakteristischen Farbe gehört. Damit ist dann beispielsweise der Hautindikator bestimmt.

- In Bildbereichen mit Himmelfarbe wird vorzugsweise der Schärfungsfaktor nach einem analogen Verfahren ebenfalls reduziert oder sogar auf 0 reduziert.
- In Bildbereichen mit Vegetation wird eine stärkere Schärfung im Allgemeinen vorgezogen. Diese kann analog zu oben mittels der Vegetationsmaske erreicht werden.
- Die letztendlich unter Einbeziehung der zusätzlichen Information bestimmte korrigierte Basis-Schärfungsmaske wird mittels Interpolation ("Upsampling" und "Smoothing"), also einem Datenausweitungsverfahren auf die Auflösung des zu schärfenden Bildes (Feinbildes) gebracht.
- Das Originalbild (Feinbild) wird dann einem Schärfungsverfahren unterworfen, das als Parameter die Elemente der Schärfungs-Korrekturmaske einsetzt. Bei dem Schärfungsverfahren kann es sich beispielsweise um eine ortsvariante Hochpassfilterung handeln, wie dies in A. Polesel, G. Ramponi, "Image Enhancement via Adaptive Unsharp Masking", IEEE Trans. Image Processing, Vol. 9, Nr. 3, Seiten 505-510, März 2000, beschrieben ist. Das heißt das Ausmaß der Schärfung variiert von Bildelement zu Bildelement auf Grund des Wertes der Elemente in der Schärfungsmaske, die den Bildelementen insbesondere eindeutig zugeordnet sind. Beispielsweise kann die Anhebung der höheren Ortsfrequenz in Abhängigkeit von den Elementen der Schärfungs-Korrekturmaske geändert werden. Die Variation der Schärfung erfolgt dabei graduell, da die Basis für die Schärfungs-Korrekturmaske das Grobbild bildete, das keine Detailinformation enthält. Die Schärfungs-Korrekturmaske kann somit als eine niederfrequente (das heißt unscharfe) Maske angesehen werden.

Wie bereits oben bemerkt wurde, gibt es verschiedene Möglichkeiten, die Schärfung lokal in Abhängigkeit von der Korrekturmaske durchzuführen. Beim adaptiven Hochpassfilter werden die den Pixeln zugeordneten Werte verändert. Dahingegen lässt das Warp-Sharpening in einem Zwischenschritt die Pixelwerte unverändert. Statt dessen erfolgt eine Verschiebung der Pixel. Auf diese Art und Weise können Überschwinger vermieden werden. Die Funktionsweise des Warp-Sharpenings ist in der bereits oben erwähnten Druckschrift von N. Arad, C. Gotsman beschrieben. Dabei werden mittels eines Edge-Detektors im Bild Kandidaten für Kanten gesucht. Die Ausgabe des Edge-Detektors wird dann weichgezeichnet. Danach wird ein Relieffilter angewandt und aus diesem eine Verschiebungsmaske abgeleitet. Die Originalpixel werden dann um den in der Verschiebungsmaske angegebenen Wert verschoben. Dies kann beispielsweise nach dem Prinzip erfolgen, dass bei einer Verschiebung um mehr als einen halben Pixel die Werte der verschobenen Pixel die Werte der Pixel ersetzen, die bisher an dieser Stelle waren. Werden Stellen durch den Verschiebevorgang frei, so werden beispielsweise die alten Werte beibehalten. Das Ausmaß des Verschiebens kann beispielsweise in Abhängigkeit von den Elementen der Schärfungs-Korrekturmaske erfolgen.

Da die Pixel bei einem derartigen Schärfungsvorgang immer zur Kante hin verschoben werden, werden die Kanten aufgesteilt, wodurch eine Schärfung erzielt wird.

Wie bereits oben erwähnt, kann das Grobbild durch Downsampling oder durch Filterverfahren (Tiefpassfilter, Gaußfilter) oder durch Filterbänke (wie in EP 0 971 315 beschrieben) erzielt werden. Ein Downsampling in einem ersten Schritt und ein Upsampling am Ende des Verfahrens ist also nicht unbedingt nötig, wird jedoch auf Grund der dadurch erforderlichen geringeren Rechenkapazität und des geringeren Speicheraufwands bevorzugt.

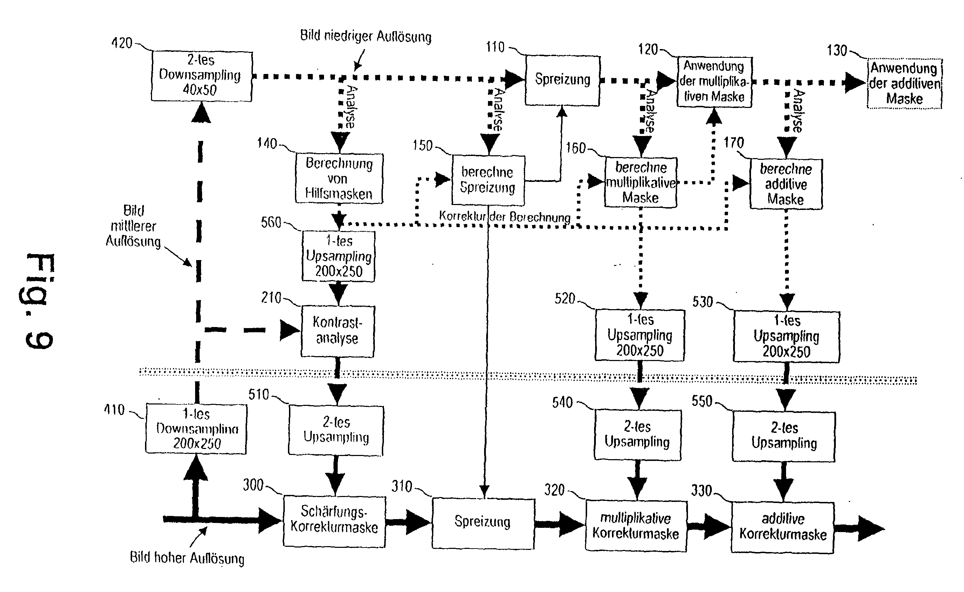

Fig. 9 zeigt einen beispielhaften Aufbau für eine erfindungsgemäße Korrekturvorrichtung, wobei die Blöcke jeweils Einheiten repräsentieren, die bestimmte Prozessabschnitte durchführen. Alternativ kann die Fig. 9 auch als Veranschaulichung des erfindungsgemäßen Korrekturverfahrens aufgefasst werden. Die Fig. 9 zeigt insbesondere die Datenflüsse und das Zusammenwirken der einzelnen Komponenten des Systems auf.

Bezugszeichen, die in Fig. 9 mit 1 beginnen, betreffen die niedrigste Auflösung. Bezugszeichen, die mit 2 beginnen, betreffen die mittlere Auflösung und Bezugszeichen, die mit 3 beginnen, betreffen die höchste Auflösung. Bezugszeichen, die mit 4 beginnen, betreffen eine Absenkung der Auflösung, und Bezugszeichen, die mit 5 beginnen, betreffen eine Erhöhung der Auflösung. Die punktierten Linien im oberen Teil des Bildes betreffen die niedrige Auflösung. Die dicken durchgehenden Linien im unteren Teil des Bildes betreffen die hohe Auflösung.

Gemäß dem in Fig. 9 gezeigten Beispiel findet eine Bildanalyse bevorzugt bei den niedrig aufgelösten Bildern statt. Eine Ausnahme stellt die Analyse des lokalen Kontrasts im Block 210 dar. Die Reduktion der Bildauflösung ("Downsampling") erfolgt vorzugsweise in mindestens zwei Stufen. In einer ersten Stufe, die im Block 410 durchgeführt wird, erfolgt eine Verringerung der Auflösung von dem hochaufgelösten Bild (typischerweise über eine Million Bildelemente) auf eine mittlere Auflösung, beispielsweise 200 x 250 Bildelemente. Im Block 420 erfolgt dann in der zweiten Stufe eine weitere Absenkung der Bildauflösung auf eine niedrige Auflösung, beispielsweise 40 x 50 Bildpunkte. Die Analyse kann somit, falls erforderlich, an Bildern unterschiedlicher Auflösung durchgeführt werden.

Die Grobkorrekturmasken, die in den Blöcken 110, 120 und 130 angewendet werden, werden basierend auf einer Analyse des Grobbildes, das aus dem Block 420 hervorgeht, bestimmt. Die Grobkorrekturmasken werden anschließend mittels Upsampling in unscharfe Masken (Korrekturmasken) umgewandelt, die bevorzugt der Auflösung des Originalbildes entsprechen, das heißt ein Element der Korrekturmaske entspricht einem Bildelement des Originalbildes oder des zu korrigierenden Feinbildes.

Bevorzugt erfolgt die Erhöhung der Auflösung in der gleichen Anzahl von Stufen, wie die Reduktion der Auflösung, so dass mit unterschiedlicher Auflösung berechnete Masken miteinander (z. B. gewichtet) kombiniert werden können, schon bevor man zur nächsten Auflösung oder nächsthöheren Auflösung übergeht.

Die Reihenfolge der Verarbeitungsschritte, wie sie in Fig. 9 gezeigt sind und wie an den Bilddaten durchgeführt werden, können auch anders gewählt werden. Die dargestellte Verarbeitungskette dient lediglich zur Veranschaulichung des Konzepts. Aus Effizienzgründen ist es natürlich sinnvoll, die einzelnen Verarbeitungsschritte soweit wie möglich zusammenzufassen.

Die Blöcke 110, 150 und 310 dienen dazu, den zur Verfügung stehenden Wertebereich oder Dynamikbereich so gut wie möglich zu nutzen und werden weiter unten näher erläutert. Im folgenden werden zuerst die übrigen Elemente der Fig. 9 näher erläutert.

Zu Beginn wird ein hoch aufgelöstes Bild mit einer Vielzahl von Bilddaten, die jeweils Bildelementen zugeordnet sind, empfangen (im Bild links unten). Die Bilddaten werden im Block 410 in einer ersten Stufe reduziert und dann in dem Block 420 nochmals reduziert. Die nach dem Block 420 vorliegenden reduzierten Bilddaten stellen somit ein Bild niedriger Auflösung (Grobbild) dar. Auf dieses Grobbild wird der Block 110 angewendet, der zu einer Spreizung des Wertebereichs führt, wie weiter unten noch erläutert wird. Auf die dann resultierenden Bilddaten, die immer noch in derselben Auflösung vorliegen, wird dann eine multiplikative Maske 120 angewendet, die beispielsweise die oben erwähnten Effekte auf die Farbsättigung hat. Schließlich wird dann im Block 130 eine additive Maske angewendet, die beispielsweise das Helligkeitsprofil ändert. Danach können weitere Masken angewendet werden, die Bildeigenschaften ändern.

Gemäß Fig. 9 werden basierend auf den Grobbilddaten im Block 140 Hilfsmasken berechnet. Diese Hilfsmasken betreffen beispielsweise charakteristische Bildbereiche, wie Haut, Himmel und Vegetation, und können beispielsweise, wie oben erläutert, bestimmt werden. Anhand dieser Masken ist dann dem System bekannt, welche Bildelemente oder Bildteile zu den charakteristischen Bereichen gehören oder welche zu charakteristischen Farbtönen zugeordnet werden.

Im Block 560 erfolgt eine Ausweitung der Hilfsmasken auf die mittlere Auflösung. Die daraus gewonnenen Informationen werden im Analyseblock 210 verarbeitet, der die lokale Schärfe analysiert. Die Analyse der lokalen Schärfe erfolgt auf der Basis des mittelaufgelösten Bildes. Dies liegt insbesondere daran, dass die Schärfe bei der Position eines Bildelements als Funktion der Bildeigenschaft (z.B. Helligkeit) sowohl an der Stelle des Bildelements als auch an der Stelle benachbarter Bildelemente definiert ist. Eine Besonderheit des erfindungsgemäßen Verfahrens liegt nun darin, dass in die Analyse der lokalen Schärfe nicht nur lokale Daten, also benachbarte Bildelemente betreffende Daten einfliesen, sondern über die im Block 560 ausgeweiteten Hilfsmasken Informationen über den Bildinhalt mit einfließen und in Abhängigkeit davon dann eine Maske bestimmt wird, deren Elemente eine lokale Schärfung festlegen, die sowohl durch jeweils lokale Daten als auch globale Bilddaten (wie z.B. die Zugehörigkeit zu einem charakteristischen Bildbereich) berücksichtigen. Die so im Block 210 gewonnene Schärfungsmaske wird dann im Block 510 ausgeweitet. Die ausgeweitete Schärfungs-Korrekturmaske 300 wird dann auf die hochaufgelösten Bilddaten angewendet.

Die Hilfsmasken werden vorzugsweise auch bei der Berechnung der Nachschlagetabellen im Block 150 verwendet, die dann zur Spreizung der Bilddaten im Block 110 angewendet werden, wie später noch näher erläutert wird. Die in den Hilfsmasken enthaltene Information insbesondere über den Bildinhalt wird bevorzugt auch bei der Berechnung der in den Blöcken 120 und 130 angewendeten Grobkorrekturmasken berücksichtigt. Die Berechnung der multiplikativen Masken erfolgt im Block 160 und die Berechnung der additiven Masken im Block 170. Die Berechnung der multiplikativen und additiven Masken, also allgemein der Grobkorrekturmasken, erfolgt im Wesentlichen basierend auf einem Grobbild und die Hilfsmasken werden vorzugsweise zur Korrektur der so berechneten Grobkorrekturmasken herangezogen.

Beispielsweise erfolgt die Berechnung der multiplikativen Masken im Block 160 basierend auf der Analyse des Grobbildes, das aus der Anwendung der LUTs im Block 110 hervorgeht, also nach Spreizung der Bilddaten. Die berechneten multiplikativen Masken werden dann im Block 120 auf das Grobbild angewendet. Sie führen, wie oben erläutert wurde, beispielsweise zur Änderung der Helligkeit in stark überbelichteten und unterbelichteten Bereichen und zur gleichzeitigen Änderung der Farbsättigung in diesen Bereichen. Durch die multiplikativen Masken noch nicht korrigierte Helligkeitsbereiche können dann in einem nächsten Schritt, nämlich im Block 130 durch die Anwendung additiver Masken korrigiert werden. Die additiven Masken werden dazu bevorzugt aus dem Grobbild berechnet, das sich aus der Anwendung der multiplikativen Masken (oder der multiplikativen Maske) im Block 120 ergibt.

Die im Block 160 berechnete Grobmaske oder die berechneten Grobkorrekturmasken werden dann bevorzugt durch Ausweitung im Block 520 in eine Maske mittlerer Auflösung, also mit mittlerer Elementzahl, transformiert. In einer weiteren Stufe, im Block 540, erfolgt dann eine nächste Ausweitung, die zu einer Korrekturmaske mit hoher Elementzahl führt. Diese Korrekturmaske wird dann im Block 320 auf die zu korrigierenden Feinbilddaten angewendet, die sich nach der Spreizung im Block 310 ergeben.

In analoger Weise, wie bei der multiplikativen Maske, wird aus der additiven Maske in zwei Stufen, nämlich im Block 530, eine Maske mittlerer Auflösung bestimmt und dann aus der Maske mittlerer Auflösung durch eine weitere Ausweitung im Block 550 eine Maske hoher Auflösung (Korrekturmaske) bestimmt. Diese Korrekturmaske, die auf der additiven Grobmaske basiert, wird dann im Block 330 auf die Bilddaten angewendet, die sich aus der Anwendung der multiplikativen Maske im Block 320 ergeben.

Vorzugsweise werden verschiedene multiplikative Korrekturmasken im Block 160 kombiniert. Dazu werden die Grobbilddaten, die zur Analyse zugeführt werden auf verschiedene Weise analysiert, um z. B. den multiplikativen Anteil einer Helligkeitskorrektur, einer Kontrastkorrektur, einer Farbtonkorrektur usw. zu bestimmen. Die verschiedenen multiplikativen Anteile oder verschiedenen multiplikativen Masken, die der jeweiligen Korrektur zugeordnet sind, werden dann zu einer gemeinsamen multiplikativen Maske im Block 160 kombiniert. Vor der Kombination, werden die einzelnen multiplikativen Masken vorzugsweise anhand von Hilfsmasken, falls gewünscht oder erforderlich korrigiert. Die korrigierte multiplikative Maske wird dann dem Block 520 zum Upsampling übergeben.

Entsprechend werden im Block 160 vorzugsweise verschiedene additive Masken kombiniert, die jeweils den additiven Anteil einer bestimmten Korrektur darstellen. Ein Beispiel für die additive Maske einer Helligkeitskorrektur und deren Bestimmung zeigt die Figur 4a. Die entsprechende multiplikative Maske 4b wird bei diesem Beispiel dann bereits im Block 160 verarbeitet und dort beispielsweise mit anderen Masken kombiniert. Die additive Maske, die die Helligkeitskorrektur betrifft (vergleiche Figur 4a) wird also im Block 170 mit anderen additiven Masken, die andere Korrekturen betreffen (beispielsweise Kontrastkorrektur) kombiniert. Die sich daraus ergebende kombinierte additive Maske wird dann dem Block 530 zum Upsampling zugeführt. Die im Block 170 berechneten verschiedenen additiven Masken basieren vorzugsweise auf einer Analyse der Grobbilddaten, die aus der Anwendung der (kombinierten) multiplikativen Maske hervorgehen. Erfolgt im Block 160 eine Kombination multiplikativer Masken, so wird bevorzugt im Block 120 die kombinierte multiplikative Masken angewendet. Entsprechend wird im Block 130 bevorzugt die kombinierte additive Maske angewendet, wenn im Block 170 eine kombinierte additive Maske berechnet wird. Obwohl in Figur 9 dies nicht gezeigt ist, können zusätzliche Stufen weiterer multiplikativer und additiver Masken am rechten Teil der Figur 9 angeschlossen werden. Selbstverständlich können auch Masken anderer mathematischer Natur eingesetzt werden, beispielsweise Masken, die eine Potenzierung oder eine sonstige Art der mathematischer Funktion beschreiben.

Im folgenden wird die Spreizung erläutert, auf die sich die Blöcke 110, 150 und 310 beziehen. Der Block 150 betrifft die Berechnung dieser Spreizung. Der Block 110 betrifft die Anwendung der Spreizung auf das Grobbild und der Block 310 betrifft die Anwendung der Spreizung auf das Bild hoher Auflösung. Die Spreizung im Block 310 erfolgt mit Hilfe einer Funktion, die im Block 150 ermittelt wurde.

Warum eine derartige Spreizung vorzugsweise durchgeführt wird, wird im Folgenden erläutert. Dabei ist zu beachten, dass die Spreizung in dem in Fig. 9 gezeigten Verarbeitungsprozess bei einem gewissen Abschnitt der Verarbeitung durchgeführt wird, und zwar nach Anwendung der Schärfung des Bildes. Die Spreizung kann auch an einer anderen Stelle erfolgen, beispielsweise zu Beginn des Verarbeitungsprozesses der Fig. 9, also vor der Schärfung.

Bei der Aufnahme eines Digitalbildes kann es vorkommen, dass (infolge technischer Begrenzungen in der Kamera, falscher Einstellungen durch den Fotografen usw.) ein generell unterbelichtetes Bild entsteht. In diesem Fall wird in allen drei Farben der zur Verfügung stehende Aussteuerungsbereich (beispielsweise 0 bis 255) nur ungenügend genutzt. Dadurch erscheint das Bild zu dunkel und zu flau.

Amateuraufnahmen entstehen auch häufig unter ungünstigen Belichtungsbedingungen (Glühlampenlicht, Neonlicht usw.). In solchen Fällen wird in mindestens einer der drei Farben der zur Verfügung stehende Aussteuerungsbereich nur ungenügend genutzt. Solche Bilder weisen einen störenden Farbstich auf.

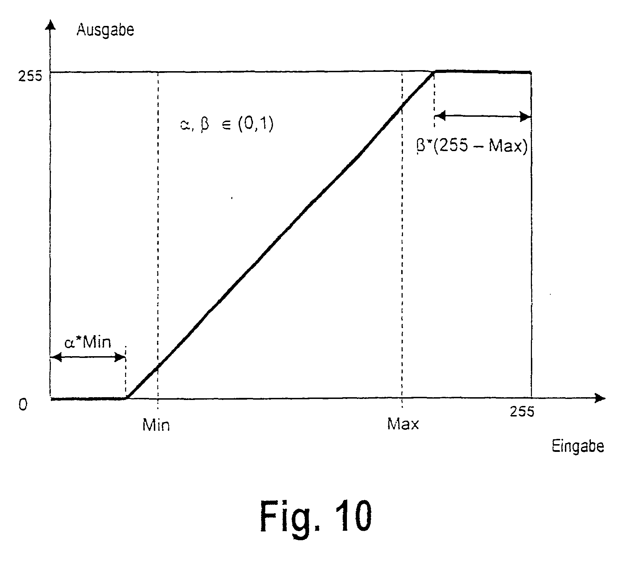

Solche Belichtungsfehler und Beleuchtungsfehler werden vorzugsweise schon am Anfang der Verarbeitungskette (das heißt vor der Anwendung der Korrekturmasken, wie z.B. die oben beschriebenen additiven Masken und multiplikativen Masken) korrigiert. Das der Spreizung zu Grunde liegende Verfahren wird anhand der Fig. 10 veranschaulicht.

Auf der Abszisse ist der eingehende Wertebereich einer Bildeigenschaft (beispielsweise Helligkeit oder Wert einer Farbe, beispielsweise der Wert der r-Komponente des RGB-Vektors). Auf der Ordinate ist der Wert gezeigt, der sich nach Anwendung des Spreizungsverfahrens ergibt.

Die eingehenden Bilddaten liegen dabei in einem Wertebereich zwischen Min und Max, wie es auf der Abszisse angezeigt ist. Würde eine radikale Spreizung vorgenommen werden, so würde sich eine Gerade ergeben, die in Fig. 10 von dem durch (Min, 0) beschriebenen Punkt bis zu dem (Max, 255) beschriebenen Punkt laufen würde. Dabei steht der Wert 255 wieder als Beispiel für einen maximalen Wert.

Erfindungsgemäß wird aber bevorzugt die in der Fig. 10 als dicke Linie eingezeichnete Funktion bestimmt. Dabei erfolgt die Bestimmung dieser Funktion basierend auf einem niedrig aufgelösten Bild. Die Werte Min und Max in der Fig. 10 stellen die minimalen und maximalen Werte im niedrig aufgelösten Bild dar. Es ist also davon auszugehen, dass der minimale Wert im hochaufgelösten Bild links von Min in Fig. 10 ist und der maximale Wert im hochaufgelösten Bild rechts von Max in Fig. 10 ist, und zwar auf Grund der im hochaufgelösten Bild enthaltenen Detailinformation.

Damit diese Information nach der Spreizung nicht verloren geht, wird die Funktion nicht so gestaltet, wie dies bei der oben erwähnten radikalen Spreizung der Fall wäre, sondern so, wie in Fig. 10 durch die dicke Linie veranschaulicht. Dadurch können im Bild enthaltene Details noch bis zu einem gewissen Umfang dargestellt werden. Der "gewisse Umfang" ist durch $\alpha$*Min nach unten begrenzt und durch $\beta$*(255-Max) noch oben begrenzt. Im Falle $\alpha = \beta = 1$ ergibt sich also die oben erwähnte radikale Spreizung und das Originalbild wird auf dem maximal möglichen Bereich (0 ... 255) gespreizt, wenn die Funktion im Block 310 der Fig. 9 auf das hochaufgelöste Bild angewendet wird.

Durch geeignete Wahl der Parameter $\alpha$ und $\beta$ kann gewährleistet werden, dass Detailinformation noch erhalten bleibt, während Bildstörungen oder Rauschen, die zu extremen Bildwerten führen, ausgeblendet werden.

Vorzugsweise wird die oben beschriebene Spreizungsfunktion als Tabelle (LUT) gespeichert.

Sollen nur Belichtungsfehler korrigiert werden, wendet man vorzugsweise ein und dieselbe Funktion auf alle drei Farben an, wobei keine Veränderung der Farbtöne erfolgt. "Min" und "Max" werden mit Vorteil auf Grund eines niedrig aufgelösten Bildes bestimmt, da die so gewonnenen Werte weniger empfindlich sind auf Störungen, Rauschen und punktuelle (lokale) Bildeigenheiten, wie bereits oben erwähnt wurde. "Min" und "Max" können als minimale bzw. maximale Helligkeit definiert werden, vorzugsweise verwendet man jedoch das Minimum bzw. das Maximum über die Gesamtheit der RGB-Werte, da damit das bereits erwähnte "Clipping" vermieden oder reduziert wird. Zur Bestimmung von "Min" wählt man also unter dem minimalen r-Wert, g-Wert und b-Wert den kleinsten Wert aus.

Das Spektrum des Lichts, das den fotografierten Gegenstand beleuchtet, beeinflusst den von der Kamera erfassten Farbton. Beispielsweise ist der erfasste Farbton davon abhängig, ob unter Tageslicht oder Kunstlicht fotografiert wurde. Will man derartige Beleuchtungsfehler korrigieren, werden vorzugsweise die Farbtöne korrigiert. Dazu wendet man beispielsweise unterschiedliche Spreizungsfunktionen auf die drei Farben an. "Min" und "Max" können beispielsweise für jede Farbe separat bestimmt werden. Ebenso können die Parameter $\alpha$ und $\beta$ für die drei Farben beispielsweise unterschiedlich gewählt werden.

Die Parameter $\alpha$, $\beta$ können entweder fest vorgegebenen sein oder aber abhängig gemacht werden von bestimmten Bildeigenschaften oder von der Bildklasse (z.B. Sonnenuntergangsbild, Blitzlichtbild usw.), welcher das aktuelle Bild zugeordnet wurde. Schließlich können die Parameter $\alpha$ und $\beta$ beispielsweise auch abhängig von der Analyse der Häufigkeitsverteilung der Werte einer Bildeigenschaft (z.B. Helligkeit) gemacht werden und je nach Kurvenverlauf der Helligkeitsverteilung können unterschiedliche Parameter gewählt werden.

Eine dem aktuellen Bild angepasste Wahl der Parameter ist vor allem auch dann nützlich, wenn die Spreizungsfunktionen auch zur Farbkorrektur verwendet werden, wie dies z.B. oben in Verbindung mit den Beleuchtungsfehlern erläutert wurde. Dadurch kann vermieden werden, dass Bilder, bei denen eine gewisse Farbe dominiert, beispielsweise Bilder mit einem großen Himmelanteil, korrigiert werden, obwohl die dominierende Farbe (beispielsweise Himmelsblau) erhalten bleiben sollte. Eine derartige angepasste Wahl der Parameter kann in diesem Fall mit Hilfe der oben erwähnten Hilfsmasken erfolgen, die charakteristische Bildbereiche und charakteristische Farben erkennen, wodurch es ermöglicht wird zu beurteilen, ob das Vorherrschen einer bestimmten Farbe im Bild erwünscht war oder nicht.

**Patentansprüche**

1. Verfahren zur ortsabhängigen Korrektur von fotografischen Bilddaten, die ein fotografisches Bild darstellen, das eine Vielzahl von Bildelementen aufweist, wobei die Bilddaten für die Bildelemente Farbwerte und mindestens eine Bildeigenschaft festlegen, mit folgenden Schritten:

a) eine Soll-Häufigkeitsverteilung von der mindestens einen Bildeigenschaft wird festgelegt und der mindestens einen Bildeigenschaft zugeordnet, wobei die Häufigkeitsverteilung die Häufigkeit eines Wertes im Bild als Funktion der durch den Wert bestimmten Bildeigenschaft beschreibt, wobei die Werte die mindestens eine Bildeigenschaft in den Bildelementen quantifizieren und wobei die Soll-Häufigkeitsverteilung einer Soll-Rangverteilung der Werte der mindestens einen Bildeigenschaft entspricht;

b) eine Häufigkeitsverteilung von der mindestens einen Bildeigenschaft wird bestimmt,

c) eine Korrekturmaske (320, 330) mit einer Vielzahl von Korrekturelementen wird basierend auf den zu korrigierenden fotografischen Bilddaten bestimmt, wobei die Korrekturelemente den Bildelementen zugeordnet sind und für die den Bildelementen entsprechenden Bilddaten Korrekturänderungen festlegen, die Änderungen der mindestens einen Bildeigenschaft entsprechen, wobei eine Sortierung der Bildelemente nach dem Wert ihrer mindestens einen Bildeigenschaft in eine Ist-Rangverteilung erfolgt und die Elemente der Korrekturmaske an dem Vergleich mit der Soll-Rangfolge ermittelt werden; und

d) die Korrekturmaske (320, 330) wird auf die Bilddaten angewendet,

wobei die Bilddaten entsprechend den Korrekturelementen geändert werden..

2. Verfahren nach Anspruch 1, bei welchem zur Bestimmung der Korrekturmaske folgende Schritte durchgeführt werden:

a. ein Bilddetailentfernungsverfahren wird auf die zu korrigierenden Bilddaten angewendet, so dass die daraus hervorgehenden Grobbilddaten ein Grobbild mit weniger Details als das Originalbild darstellen;

b. basierend auf dem Grobbild wird eine Grobkorrekturmaske (120, 130) bestimmt, die für die Grobbilddaten Grobänderungen festlegt, die Änderungen der mindestens einen Bildeigenschaft für das Grobbild festlegen;

c. basierend auf dem geänderten Grobbild wird mindestens eine weitere Grobkorrekturmaske bestimmt.

3. Verfahren nach Anspruch 1 oder 2, bei welchem eine der mindestens zwei Bildeigenschaften die Helligkeit oder der Kontrast ist und die andere Bildeigenschaft der Farbton und/oder Farbsättigung ist und die Änderungen der Helligkeit oder des Kontrastes als Funktion des Farbtons und/oder Farbsättigung erfolgen.

4. Verfahren, nach einem der Ansprüche 1 bis 3, zum Spreizen eines Wertebereichs von Bilddaten, die eine Bildeigenschaft beschreiben, wobei die zu spreizenden Bilddaten für eine bestimmte Bildeigenschaft einen tatsächlichen Wertebereich umfassen, der kleiner ist, als der maximal mögliche, durch die Bilddaten darstellbare Wertebereich, mit folgenden Schritten:

a. eine Spreizungsfunktion wird aus den zu spreizenden Bilddaten derartig bestimmt, dass die Extremwerte eines Wertebereichs von durch die Spreizungsfunktion gespreizten Bilddaten zumindest an einem Rand des Wertebereichs nicht die Extremwerte des maximalen möglichen Wertebereichs einnehmen, sondern innerhalb dieses Wertebereichs liegen, wobei der Abstand der Extremwerte des gespreizten Wertebereichs von den Extremwerten des maximal möglichen Wertebereichs in Abhängigkeit von mindestens einer Bildeigenschaften bestimmt wird; und

b) die bestimmte Spreizungsfunktion wird auf die zu spreizenden Bilddaten angewendet.

5. Verfahren, nach einem der Ansprüche 1 bis 3, zum Spreizen eines Wertebereichs von Bilddaten, die eine Bildeigenschaft beschreiben, wobei die zu spreizenden Bilddaten für eine bestimmte Bildeigenschaft einen tatsächlichen Wertebereich umfassen, der kleiner ist, als der maximal mögliche, durch die Bilddaten darstellbare Wertebereich, und wobei unter Einsatz eines Bilddetailentfernungsverfahren Grobbilddaten aus den zu spreizenden Bilddaten abgeleitet werden, wobei die Grobbilddaten weniger Bilddetails als die zu spreizenden Bilddaten darstellen, mit folgenden Schritten:

a. eine Spreizungsfunktion wird aus den Grobbilddaten derartig bestimmt, dass die Extremwerte eines Wertebereichs von durch die Spreizungsfunktion gespreizten Grobbilddaten zumindest an einem Rand des Wertebereichs nicht die Extremwerte des maximalen möglichen Wertebereichs einnehmen, sondern innerhalb dieses Wertebereichs liegen, wobei der Abstand der Extremwerte des gespreizten Wertebereichs von den Extremwerten des maximal möglichen Wertebereichs steuerbar ist;

b. die bestimmte Spreizungsfunktion wird auf die zu spreizenden Bilddaten angewendet.

6. Vorrichtung zum ortsabhängigen Korrigieren fotografischer Bilddaten, die ein fotografisches Bild darstellen, das eine Vielzahl von Bildelementen aufweist, wobei die Bilddaten für die Bildelemente Farbwerte und mindestens eine Bildeigenschaft festlegen, wobei die Vorrichtung folgendes umfasst:

a. eine Korrekturmasken-Bestimmungseinheit, die eine Korrekturmaske mit einer Vielzahl von Korrekturelementen aus den zu korrigierenden fotografischen Bilddaten bestimmt, wobei die Korrekturelemente den Bildelementen zugeordnet sind und für die den Bildelementen entsprechenden Bilddaten Korrekturänderungen festlegen, die Änderungen der mindestens einen Bildeigenschaft entsprechen; wobei die Korrekturmaskenbestimmungseinheit ausgebildet ist, die Schritte des Verfahrens nach einem der Ansprüche 1 bis 5 durchzuführen.

7. Programm, das, wenn es in einem Computer geladen ist oder wenn es auf einem Computer ausgeführt wird, den Computer veranlasst das Verfahren nach einem der Ansprüche 1 bis 12 durchzuführen.

8. Computerspeichermedium, auf dem das Programm nach Anspruch 7 gespeichert ist.

9. Fotografischer Printer oder fotografisches Labor, mit einem Computer in dem das Programm nach Anspruch 7 geladen ist oder auf dem dieses Programm ausgeführt wird.

**Claims**

1. Method for the position-dependent correction of photographic image data which represent a photographic image that comprises a multiplicity of image elements, the image data establishing colour values and at least one image property for the image elements, having the following steps:

   a) a setpoint frequency distribution of the at least one image property is established and assigned to the at least one image property, the frequency distribution describing the frequency of a value in the image as a function of the image property determined by the value, the values quantifying the at least one image property in the image elements and the setpoint frequency distribution corresponding to a setpoint rank distribution of the values of the at least one image property;
   b) a frequency distribution of the at least one image property is determined,
   c) a correction mask (320, 330) having a multiplicity of correction elements is determined on the basis of the photographic image data to be corrected, the correction elements being assigned to the image elements and establishing corrective modifications that correspond to modifications of the at least one image property for the image data corresponding to the image elements, the image elements being sorted into an actual rank distribution according to the value of their at least one image property and the elements of the correction mask being determined by comparison with the setpoint rank sequence; and
   d) the correction mask (320, 330) is applied to the image data, the image data being modified according to the correction elements.

2. Method according to Claim 1, wherein the following steps are carried out in order to determine the correction mask:

   a. an image detail removal method is applied to the image data to be corrected, so that the coarse image data resulting from this represent a coarse image with fewer details than the original image;
   b. a coarse correction mask (120, 130) which, for the coarse image data, establishes coarse modifications that establish modifications of the at least one image property for the coarse image, is determined on the basis of the coarse image;
   c. at least one further coarse correction mask is determined on the basis of the modified course image.

3. Method according to Claim 1 or 2, wherein one of the at least two image properties is the brightness or the contrast and the other image property is the hue and/or colour saturation and the modifications of the brightness or the contrast are carried out as a function of the hue and/or the colour saturation.

4. Method according to one of Claims 1 to 3, for expanding a value range of image data which describe an image property, wherein the image data to be expanded comprise an actual value range for a particular image property which is less than the maximum possible value range representable by the image data, having the following steps:

   a. an expansion function is determined from the image data to be expanded, so that the extreme values of a value range of image data expanded by the expansion function do not take the extreme values of the maximum possible value range at least at one edge of the value range, but lie within this value range, the distance of the extreme values of the expanded value range from the extreme values of the maximum possible value range being determined as a function of at least one image property; and
   b. the expansion function which is determined is applied to the image data to be expanded.

5. Method according to one of Claims 1 to 3, for expanding a value range of image data which describe an image property, wherein the image data to be expanded comprise an actual value range for a particular image property which is less than the maximum possible value range representable by the image data, and wherein coarse image data are derived by using an image detail removal method from the image data to be expanded, the coarse image data representing fewer image details than the image data to be expanded, having the following steps:

a. an expansion function is determined from the coarse image data, so that the extreme values of a value range of coarse image data expanded by the expansion function do not take the extreme values of the maximum possible value range at least at one edge of the value range, but lie within this value range, the distance of the extreme values of the expanded value range from the extreme values of the maximum possible value range being controllable;

b. the expansion function which is determined is applied to the image data to be expanded.

**6.** Device for the position-dependent correction of photographic image data which represent a photographic image that comprises a multiplicity of image elements, wherein the image data establish colour values and at least one image property for the image elements, the device comprising the following:

a. a correction mask determination unit which determines a correction mask having a multiplicity of correction elements from the photographic image data to be corrected, the correction elements being assigned to the image elements and establishing corrective modifications that correspond to modifications of the at least one image property for the image data corresponding to the image elements; the correction mask determination unit being designed for carrying out the method according to one of Claims 1 to 5.

**7.** Program which, when it is loaded in a computer or when it is executed on a computer, enables the computer to carry out the method according to one of Claims 1 to 12.

**8.** Computer storage medium, on which the program according to Claim 7 is stored.

**9.** Photographic printer or photographic laboratory having a computer in which the program according to Claim 7 is loaded or on which this program is executed.

**Revendications**

**1.** Procédé pour la correction dépendante du lieu de données d'image photographiques, qui représentent une image photographique, laquelle présente une pluralité d'éléments d'image, les données d'image déterminant des valeurs chromatiques et au moins une propriété d'image pour les éléments d'image, comprenant les étapes suivantes :

a) une répartition de fréquence de consigne de l'au moins une propriété d'image est fixée et attribuée à l'au moins une propriété d'image, la répartition de fréquence décrivant la fréquence d'une valeur dans l'image en tant que fonction de la propriété d'image déterminée par la valeur, les valeurs quantifiant l'au moins une propriété d'image dans les éléments d'image et la répartition de fréquence de consigne correspondant à une répartition de consigne par rang des valeurs de l'au moins une propriété d' image ;

b) une répartition de fréquence de l'au moins une propriété d'image est déterminée,

c) un masque de correction (320, 330) avec une pluralité d'éléments de correction est déterminé en se basant sur les données d'images photographiques à corriger, les éléments de correction étant attribués aux éléments d'image et fixant, pour les données d'images qui correspondent aux éléments d'image, des modifications de correction, qui correspondent à des modifications de l'au moins une propriété d'image, un tri des éléments d'image intervenant en fonction de la valeur de leur au moins une propriété d'image, suivant une répartition par rang effective et les éléments du masque de correction étant déterminés par comparaison avec le classement théorique ; et

d) le masque de correction (320, 330) est appliqué aux données d'image, les données d'image étant modifiées en fonction des éléments de correction.

**2.** Procédé selon la revendication 1, dans lequel, pour déterminer le masque de correction, on effectue les étapes suivantes :

a. un procédé d'élimination de détail d'image est appliqué aux données d'image à corriger, de sorte que les données d'image approximative qui en ressortent représentent une image approximative avec moins de détails que l'image originale ;

b. sur la base de l'image approximative, on détermine un masque de correction approximative (120, 130) qui définit, pour les données d'image approximative, des modifications approximatives qui définissent les modifications de l'au moins une propriété d'image pour l'image approximative ;

c. sur la base de l'image approximative modifiée, on définit au moins un autre masque de correction approximative.

**3.** Procédé selon la revendication 1 ou 2, dans lequel une des au moins deux propriétés d'image est la luminosité ou le contraste et l'autre propriété d'image est la teinte et/ou la saturation de couleur et les modifications de la luminosité ou du contraste s'effectuent en fonction de la teinte et/ou de la saturation de couleur.

**4.** Procédé selon l'une des revendications 1 à 3 pour l'étalement d'une plage de valeurs de données d'image, qui décrivent une propriété d'image, les données d'image à étaler pour une propriété d'image définie comprenant une plage de valeurs réelle qui est inférieure à la plage de valeurs maximale possible et pouvant être représentée par les données d'image, comprenant les étapes suivantes :

a. une fonction d'étalement est définie à partir des données d'image à étaler de telle sorte que les valeurs extrêmes d'une plage de valeurs de données d'image étalées par la fonction d'étalement ne prennent pas, tout du moins sur un bord de ta plage de valeurs, les valeurs extrêmes de la plage de valeurs maximale possible, mais se situent à l'intérieur de cette plage de valeurs, l'espacement des valeurs extrêmes de la plage de valeurs étalée par rapport aux valeurs extrêmes de la plage de valeurs maximale possible étant déterminé en fonction d'au moins une propriété d'image ; et
b) la fonction d'étalement définie est appliquée aux données d'images à étaler.

**5.** Procédé selon l'une des revendications 1 à 3, pour l'étalement d'une plage de valeurs de données d'image qui décrivent une propriété d'image, les données d'image à étaler pour une propriété d'image définie comprenant une plage de valeurs réelle, qui est inférieure à la plage de valeurs maximale possible, pouvant être présentée par les données d'image, et des données d'image approximative étant déduites des données d'image à étaler avec l'utilisation d'un procédé d'élimination de détail d'image, les données d'image approximative représentant moins de détails d'image que les données d'image à étaler, comprenant les étapes suivantes :

a. une fonction d'étalement est définie à partir des données d'image approximative de telle sorte que les valeurs extrêmes d'une plage de valeurs de données d'image approximative étalées par la fonction d'étalement ne prennent pas, tout du moins sur un bord de la plage de valeurs, les valeurs extrêmes de la plage de valeurs maximale possible, mais se situent à l'intérieur de cette plage de valeurs, l'espacement des valeurs extrêmes de la plage de valeurs étalée par rapport aux valeurs extrêmes de la plage de valeurs maximale possible pouvant être contrôlé ;
b. la fonction d'étalement définie est appliquée aux données d'images à étaler.

**6.** Dispositif pour corriger en fonction du lieu des données d'image photographiques, qui représentent une image photographique, laquelle présente une pluralité d'éléments d'image, les données d'image pour les éléments d'image définissant des valeurs chromatiques et au moins une propriété d'image, le dispositif comprenant au moins :

a. une unité de détermination de masque de correction qui détermine un masque de correction avec une pluralité d'éléments de correction à partir des données d'image photographique à corriger, les éléments de correction étant associés aux éléments d'image et déterminant des modifications de correction des données d'image qui correspondent aux éléments d'image, et qui correspondent aux modifications de l'au moins une propriété d'image ; l'unité de détermination de masque de correction étant conçue pour mettre en oeuvre les étapes du procédé selon l'une des revendications 1 à 5.

**7.** Programme qui, s'il est chargé dans un ordinateur ou s'il est exécuté sur un ordinateur, ordonne à l'ordinateur de mettre en oeuvre le procédé selon l'une des revendications 1 à 12.

**8.** Support de stockage informatique sur lequel est stocké le programme selon la revendication 7.

**9.** Imprimante photographique ou laboratoire photographique avec un ordinateur dans lequel le programme selon la revendication 7 est chargé ou sur lequel ce programme est exécuté.

Fig. 1b

Fig. 1a

Fig. 1c

EP 1 231 564 B1

# Fig. 2

# Fig. 3

Additive Maske

Wert der additiven Maskenelemente

Aufhellung der Schatten

0

Pixel-Helligkeit

Abdunklung der Lichter

Fig. 4a

Multiplikative Maske

Wert der faktoriellen Maskenelemente

Faktor angewendet auf RGB-Vektor

1

Pixel-Helligkeit

Faktor für CMY-Vektor

Fig. 4b

EP 1 231 564 B1

Fig. 5b

Fig. 5a

Fig. 6b

Fig. 6a

Fig. 7b

Fig. 7a

EP 1 231 564 B1

Grobbild

lokale
Kontrastanalyse

Kontrastmaske

LUT

Schärfungsfaktor

lokaler Kontrast

Basis-Schärfungsmaske

Verringern ◄——— Hautmaske

Unterdrücken ◄——— Himmelmaske

Erhöhen ◄——— Vegetationsmaske

Schärfungs-Korrekturmaske

# Fig. 8

Fig. 9

Fig. 10